(19) Europäisches Patentamt / European Patent Office / Office européen des brevets

(11) **EP 3 689 727 B1**

(12) **EUROPEAN PATENT SPECIFICATION**

(45) Date of publication and mention
of the grant of the patent:
**15.02.2023 Bulletin 2023/07**

(21) Application number: **18861719.5**

(22) Date of filing: **24.07.2018**

(51) International Patent Classification (IPC):
**B62K 5/10** *(2013.01)*          **B62K 5/027** *(2013.01)*
**B62K 5/05** *(2013.01)*          **B62K 5/08** *(1968.09)*
**B62K 11/04** *(1968.09)*          **B62J 7/04** *(1968.09)*
**B62J 9/14** *(2020.01)*          **B62J 9/23** *(2020.01)*
**B62J 1/12** *(1968.09)*

(52) Cooperative Patent Classification (CPC):
**B62K 5/027; B62J 1/12; B62J 7/04; B62J 9/14;
B62J 9/23; B62K 5/05; B62K 5/08; B62K 5/10;
B62K 11/04**

(86) International application number:
**PCT/JP2018/027591**

(87) International publication number:
**WO 2019/064857 (04.04.2019 Gazette 2019/14)**

(54) **LEANING VEHICLE**

NEIGEFAHRZEUG

VÉHICULE À INCLINAISON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.09.2017 JP 2017187769**

(43) Date of publication of application:
**05.08.2020 Bulletin 2020/32**

(73) Proprietor: **Yamaha Hatsudoki Kabushiki Kaisha
Iwata-shi, Shizuoka 438-8501 (JP)**

(72) Inventor: **KURAKAKE, Haruhito
Iwata-shi
Shizuoka 438-8501 (JP)**

(74) Representative: **Grünecker Patent- und
Rechtsanwälte
PartG mbB
Leopoldstraße 4
80802 München (DE)**

(56) References cited:
WO-A1-97/27071          WO-A1-2015/115109
WO-A1-2015/115109          WO-A1-2017/081251
DE-A1-102013 223 317          JP-A- H11 334 670
JP-A- 2004 330 984          JP-A- 2007 091 140
JP-A- 2008 068 653          JP-A- 2011 042 225
JP-A- 2011 042 225          JP-A- 2011 195 099
JP-A- 2016 060 368          TW-U- M 399 077

• ASAHI SANYO CO.,LTD: "Tricycle from the age
of 50 years old", FUKUNOSOKE, 4 October 2018
(2018-10-04), XP055588725, Retrieved from the
Internet:
URL:http://www.fukunosuke.com/goods/0680/8
02_0686/index.html [retrieved on 2012-06-20]

## Description

The present teaching relates to a leaning vehicle provided with a right front wheel, a left front wheel and a rear wheel.

Prior art document JP 2011 042225 A discloses a tricycle having a vehicle body frame that leans in a leaning-vehicle leftward direction in turning left and leans in a leaning-vehicle rightward direction in turning right. A left front wheel is disposed further leftward in a vehicle-body-frame leftward direction than a center of the vehicle-body-frame in a vehicle-body-frame left-right direction, the left front wheel being rotatable around a left-front-wheel axle, and a right front wheel is disposed further rightward in a vehicle-body-frame rightward direction than a center of the vehicle-body-frame in the vehicle-body-frame left-right direction, the right front wheel being rotatable around a right-front-wheel axle. A link mechanism supports the left front wheel and the right front wheel, the link mechanism allowing the left-front-wheel axle to be located further upward in a vehicle-body-frame upward direction than the right-front-wheel axle to lean the vehicle body frame in the leaning-vehicle leftward direction in turning left, the link mechanism allowing the right-front-wheel axle to be located further upward in the vehicle-body-frame upward direction than the left-front-wheel axle to lean the vehicle body frame in the leaning-vehicle rightward direction in turning right. A rear wheel is disposed further backward in a vehicle-body-frame backward direction than the left front wheel and the right front wheel and rotatable around a rear wheel axle, the rear wheel being caused to lean along with the vehicle body frame in the leaning-vehicle leftward direction in turning left and to lean along with the vehicle body frame in the leaning-vehicle rightward direction in turning right. A steering mechanism is provided for steering the left front wheel and the right front wheel. A rider-only single seat with an only one seating surface is supported by the vehicle body frame, the rider-only single seat being only for a rider who steers the steering mechanism to sit. Said tricycle comprises a front carrier and a back carrier with the front carrier arranged in front of a head pipe of the steering mechanism and with the back carrier arranged further backward in the vehicle-body-frame backward direction than the rider-only single seat, wherein in a state in which the link mechanism causes the left-front-wheel axle and the right-front-wheel axle to be at a same level in a vehicle-body-frame up-down direction and the left front wheel, the right front wheel, and the rear wheel are grounded, Formulae (a), (b), and (c) hold: (a) L1 < L2; (b) L3 < L2; (c) L4 < L5, where L1 is defined as a distance in a vehicle-body-frame front-back direction from a rear end of the rider-only single seat to the rear wheel axle, L2 is defined as a distance in the vehicle-body-frame front-back direction from the rear end of the rider-only single seat to a wheelbase center located at a center between the left-front-wheel axle or the right-front-wheel axle and the rear wheel axle in the vehicle-body-frame front-back direction, L3 is defined as a distance in the vehicle-body-frame front-back direction from the rear end of the rider-only single seat to a center of the carrying section in the vehicle-body-frame front-back direction, L4 is defined as a distance in the vehicle-body-frame front-back direction from the rear end of the rider-only single seat to a front end of the carrying section, and L5 is defined as a distance in the vehicle-body-frame front-back direction from a front end of an only one seating surface that allows the rider to sit in the rider-only single seat to a hip point of the rider sitting on the rider-only single seat.

As inventions for leaning vehicles in the past, three-wheeled vehicles described in Patent Literature 1 and Patent Literature 2 are known, for example. The three-wheeled vehicles are each provided with a handlebar, a vehicle body frame, a left front wheel, a right front wheel, and a rear wheel. A rider operates the handlebar to rotate the left front and right front wheels in a counterclockwise direction when the three-wheeled vehicle is viewed from above. Further, the rider leans the vehicle body frame in a three-wheeled-vehicle leftward direction. This causes the three-wheeled vehicle to turn to the left. Similarly, the rider operates the handlebar to rotate the left front and right front wheels in a clockwise direction when the three-wheeled vehicle is viewed from above. Further, the rider leans the vehicle body frame in a three-wheeled-vehicle rightward direction. This causes the three-wheeled vehicle to turn to the right.

CITATION LIST

PATENT LITERATURE

Patent Literature 1: Japanese Patent Application Publication No. 2005-247303
Patent Literature 2: U.S. Patent No. 8814186

When the three-wheeled vehicles described in Patent Literature 1 and Patent Literature 2 are to be used on business, on commuting, or other purposes, there is an increasing demand for carrying a load.

Therefore, an object of the present teaching is to provide a leaning vehicle that can increase a load capacity for a rear mounted load on the leaning vehicle while preventing the leaning vehicle from increasing in size. According to the present invention said object is solved by a leaning vehicle having the features of independent claim 1. Preferred embodiments are laid down in the dependent claims.

For the leaning vehicle provided with a left front wheel, a right front wheel, a rear wheel, and a link mechanism, the present inventors have studied to increase a carrying section provided behind a passenger seat in a leaning-vehicle backward direction for improving user convenience. However, simply increasing the carrying section leads to a backward extension of a rear portion of the leaning vehicle or widening of the rear portion of the leaning vehicle in a left-right direction. As a result, the size of the leaning vehicle is increased.

Accordingly, the present inventors have conducted a study introducing a different technical concept from those that have been proposed, which intend to improve and increase the carrying section of the leaning vehicle. Specifically, the present inventors have conducted a study introducing a technical concept to newly construct a layout of the left front wheel, the right front wheel, the rear wheel, the link mechanism, the seat, and the carrying section primarily for increasing the carrying section.

To increase the carrying section of the leaning vehicle provided with a left front wheel, a right front wheel, and a rear wheel, the present inventors have first examined a weight distribution of the leaning vehicle. As a result, in the leaning vehicle provided with a left front wheel, a right front wheel, and a rear wheel, it has been found that a total percentage of the left and right front wheels in the weight distribution is larger than a percentage of a front wheel in a weight distribution of a leaning vehicle provided with one front wheel and one rear wheel. Accordingly, the present inventors have studied how a load is to be carried in a favorable manner on the leaning vehicle that has a large total percentage of the left and right front wheels in the weight distribution.

In the case of the leaning vehicle provided with a left front wheel, a right front wheel, and a rear wheel, the total percentage of the left and right front wheels in the weight distribution is larger, as described above. In other words, the percentage of the rear wheel in the weight distribution is smaller in the leaning vehicle provided with a left front wheel, a right front wheel, and a rear wheel. As a result, the present inventors have realized that the percentage of the rear wheel in the weight distribution may be increased by carrying a load near and above the rear wheel (hereinafter referred to as "rear mounted load").

Meanwhile, the leaning vehicle is either in a state in which the vehicle is carrying a rear mounted load (carrying state) or in a state in which the vehicle is not carrying a rear mounted load (non-carrying state). In some cases, it is desirable that no large change occurs in the percentage of the left and right front wheels in the weight distribution (hereinafter referred to as "front weight distribution") nor the percentage of the rear wheel in the weight distribution (hereinafter referred to as "rear weight distribution") between the carrying state and the non-carrying state. In this case, it is desirable that the rear mounted load is carried at a position where no large change occurs in the front weight distribution nor the rear weight distribution between the carrying state and the non-carrying state. Accordingly, the present inventors have studied a position where the rear mounted load is to be carried.

As described above, in the leaning vehicle, the rear mounted load is carried near and above the rear wheel. Because of this, a weight applied to the rear wheel varies between the carrying state and the non-carrying state. However, the present inventors considered that a large change in the front weight distribution and the rear weight distribution can be suppressed by reducing a rate of variation of the weight applied to the rear wheel between the carrying state and the non-carrying state. Then, as described below, the present inventors considered that the seat may be positioned in the leaning vehicle such that a larger part of the weight of a rider is applied to the rear wheel.

For example, a case in which a rider weighing 60kg sits on the seat of the leaning vehicle will be explained as an example. In a first example, consider a leaning vehicle in which a weight of 20kg is applied to the left and right front wheels and a weight of 40kg is applied to the rear wheel. In a second example, consider a leaning vehicle in which a weight of 5kg is applied to the left and right front wheels and a weight of 55kg is applied to the rear wheel. In the first example, when a rear mounted load of 20kg is carried, the weight applied to the rear wheel increases 50%. In the second example, when a rear mounted load of 20kg is carried, the weight applied to the rear wheel increases 36%. In this way, as the weight of the rider applied to the rear wheel increases, the rate of variation of the weight applied to the rear wheel is reduced between the carrying state and the non-carrying state. Then, the present inventors have considered that the seat for a rider to sit may be positioned near the rear wheel in order to suppress a large change in the front weight distribution and the rear weight distribution between the carrying state and the non-carrying state.

For the leaning vehicle with a large change in the front weight distribution and the rear weight distribution being suppressed between the carrying state and the non-carrying state as described above, the present inventors have studied how a larger amount of rear mounted load can be carried without increasing the size of the leaning vehicle. Then, the present inventors have studied modes of use of leaning vehicles for business and commuting uses. The present inventors have realized that, in most cases, a leaning vehicle for business and commuting uses is ridden by only the rider without a passenger. Accordingly, the present inventors have conceived to arrange a rider-only single seat and a carrying section for rear mounted load behind the rider-only single seat.

The present teaching adopts the following configuration in order to solve the above problem.

(1) A leaning vehicle including:

a vehicle body frame that leans in a leaning-vehicle leftward direction in turning left and leans in a leaning-vehicle rightward direction in turning right;
a left front wheel disposed further leftward in a vehicle-body-frame leftward direction than a center of the vehicle-body-frame in a vehicle-body-frame left-right direction, the left front wheel being rotatable around a left-front-wheel axle;

a right front wheel disposed further rightward in a vehicle-body-frame rightward direction than a center of the vehicle-body-frame in the vehicle-body-frame left-right direction, the right front wheel being rotatable around a right-front-wheel axle;

a link mechanism that supports the left front wheel and the right front wheel, the link mechanism allowing the left-front-wheel axle to be located further upward in a vehicle-body-frame upward direction than the right-front-wheel axle to lean the vehicle body frame in the leaning-vehicle leftward direction in turning left, the link mechanism allowing the right-front-wheel axle to be located further upward in the vehicle-body-frame upward direction than the left-front-wheel axle to lean the vehicle body frame in the leaning-vehicle rightward direction in turning right;

a rear wheel disposed further backward in a vehicle-body-frame backward direction than the left front wheel and the right front wheel and rotatable around a rear wheel axle, the rear wheel being caused to lean along with the vehicle body frame in the leaning-vehicle leftward direction in turning left and to lean along with the vehicle body frame in the leaning-vehicle rightward direction in turning right;

a steering mechanism for steering the left front wheel and the right front wheel;

a rider-only single seat supported by the vehicle body frame, the rider-only single seat being only for a rider who steers the steering mechanism to sit; and

a carrying section disposed further backward in the vehicle-body-frame backward direction than the rider-only single seat, the carrying section being loaded with a rear mounted load thereon, and

a storage space provided below the rider-only single seat in the vehicle-body-frame downward direction, and

the rider-only single seat is capable of assuming a closed state in which the storage space is not exposed to outside of the leaning vehicle and an open state in which the storage space is exposed to outside of the leaning vehicle,

wherein in a state in which the link mechanism causes the left-front-wheel axle and the right-front-wheel axle to be at a same level in a vehicle-body-frame up-down direction and the left front wheel, the right front wheel, and the rear wheel are grounded, Formulae (a), (b), and (c) hold:

$$L1 < L2 \ldots (a)$$

$$L3 < L2 \ldots (b)$$

$$L4 < L5 \ldots (c)$$

where L1 is defined as a distance in a vehicle-body-frame front-back direction from a rear end of the rider-only single seat to the rear wheel axle,

L2 is defined as a distance in the vehicle-body-frame front-back direction from the rear end of the rider-only single seat to a wheelbase center located at a center between the left-front-wheel axle or the right-front-wheel axle and the rear wheel axle in the vehicle-body-frame front-back direction,

L3 is defined as a distance in the vehicle-body-frame front-back direction from the rear end of the rider-only single seat to a center of the carrying section in the vehicle-body-frame front-back direction,

L4 is defined as a distance in the vehicle-body-frame front-back direction from the rear end of the rider-only single seat to a front end of the carrying section, and

L5 is defined as a distance in the vehicle-body-frame front-back direction from a front end of a seating surface that allows the rider to sit in the rider-only single seat to a hip point of the rider sitting on the rider-only single seat.

According to the leaning vehicle of (1), the rate of variation of the weight applied to the rear wheel between the carrying state and the non-carrying state is reduced. Specifically, in the leaning vehicle of (1), such a state in which the link mechanism causes the left-front-wheel axle and the right-front-wheel axle to be at a same level in a vehicle-body-frame up-down direction and the left front wheel, the right front wheel, and the rear wheel are grounded means that the vehicle body frame is upright. In the leaning vehicle of (1), when the vehicle body frame is upright, the distance L1 in the vehicle-body-frame front-back direction from the rear end of the rider-only single seat to the rear wheel axle is shorter than the distance L2 in the vehicle-body-frame front-back direction from the rear end of the rider-only single seat to the wheelbase center. In other words, the rear end of the rider-only single seat is resultantly located in a rear half from the wheelbase, and thus the rider-only single seat is located near the rear wheel axle. In this way, the center of gravity of the rider sitting on the rider-only single seat is located near the rear wheel axle.

Further, in the leaning vehicle of (1), when the vehicle body frame is upright, the distance L3 in the vehicle-body-frame front-back direction from the rear end of the rider-only single seat to the center of the carrying section in the vehicle-body-frame front-back direction is shorter than the distance L2 in the vehicle-body-frame front-back direction from the rear end of the rider-only single seat to the wheelbase center. In other words, the rider-only single seat is located near the carrying section. In this way, the center of gravity of the rider sitting on the rider-only single seat is located near the center of gravity of a rear mounted load carried on the carrying section. As described above, since the center of gravity of the rider sitting on the rider-only single seat is located near the rear wheel axle, the center of gravity of a rear mounted load carried on the carrying section is also located near the rear wheel axle.

As described above, in the leaning vehicle of (1), the center of gravity of the rider sitting on the rider-only single seat and the center of gravity of a rear mounted load carried on the carrying section is located near the rear wheel axle. Accordingly, most of the weight of the rider and the rear mounted load is applied to the rear wheel. As a result, the rate of variation of the weight applied to the rear wheel between the carrying state and the non-carrying state is reduced.

Further, according to the leaning vehicle of (1), the load capacity for a rear mounted load can be increased while preventing the leaning vehicle from increasing in size. Specifically, the distance L4 in the vehicle-body-frame front-back direction from the rear end of the rider-only single seat to the front end of the carrying section is shorter than the distance L5 in the vehicle-body-frame front-back direction from the front end of the seating surface that allows the rider to sit in the rider-only single seat to the hip point of the rider sitting on the rider-only single seat. The distance L5 in the vehicle-body-frame front-back direction from the front end of the seating surface to the hip point of the rider sitting on the rider-only single seat corresponds to a space where one person can sit. Accordingly, in the leaning vehicle of (1), there is no space where one person can sit between the rear end of the rider-only single seat and the front end of the carrying section. As such, the carrying section is disposed behind the rear end of the rider-only single seat in the vehicle-body-frame backward direction with almost no wasteful space. As a result, in the leaning vehicle of (1), a larger amount of rear mounted load can be carried without increasing the size of the leaning vehicle.

According to the leaning vehicle of (1), since a storage space is provided below the rider-only single seat in the vehicle-body-frame downward direction, a storage load can be stored in the storage space.

(2) The leaning vehicle of (1), wherein

the vehicle body frame includes a link support portion,
the link mechanism includes: an upper cross member disposed further upward in the vehicle-body-frame upward direction than the left front wheel and the right front wheel, the upper cross member being rotatably supported in an intermediate portion thereof by an upper portion of the link support portion; a lower cross member disposed further downward in a vehicle-body-frame downward direction than the upper cross member and further upward in the vehicle-body-frame upward direction than the left front wheel and the right front wheel, the lower cross member being rotatably supported in an intermediate portion thereof by a lower portion of the link support portion; a left side member rotatably supported in an upper portion thereof by a left portion of the upper cross member, the left side member being rotatably supported in a lower portion thereof by a left portion of the lower cross member; and a right side member rotatably supported in an upper portion thereof by a right portion of the upper cross member, the right side member being rotatably supported in a lower portion thereof by a right portion of the lower cross member, the left front wheel is supported by the left side member, and the right front wheel is supported by the right side member.

According to the leaning vehicle of (2), in such a leaning vehicle provided with a parallelogram linkage link mechanism, a larger amount of rear mounted load can be carried without increasing the size of the leaning vehicle.

(3) The leaning vehicle of any one of (1) to (2), wherein

a length of the rider-only single seat in the vehicle-body-frame front-back direction is shorter than a length from the wheelbase center to the rear wheel axle in the vehicle-body-frame front-back direction.

According to the leaning vehicle of (3), since the length of the rider-only single seat in the vehicle-body-frame front-back direction is short, only the rider is allowed to sit on the rider-only single seat but no passenger is allowed to sit on the rider-only single seat.

(4) The leaning vehicle of any one of (1) to (3), further including an engine for generating a driving force to rotate the rear wheel, the engine having a crankshaft, wherein

when the engine is seen from the vehicle-body-frame leftward or rightward direction, the rider-only single seat is disposed above a central axis of rotation of the crankshaft in the vehicle-body-frame upward direction.

According to the leaning vehicle of (4), the center of gravity of the rider sitting on the rider-only single seat is located near the rear wheel axle. Specifically, in the leaning vehicle of (4),

when the engine is seen from the vehicle-body-frame leftward or rightward direction, the rider-only single seat is disposed above the central axis of rotation of the crankshaft of a power unit, as the engine, in the vehicle-body-frame upward direction. Accordingly, the distance between the rider-only single seat and the power unit is short in the vehicle-body-frame front-back direction. The power unit is disposed near the rear wheel. As a result, the distance between the rider-only single seat and the rear wheel axle is short in the vehicle-body-frame front-back direction. Accordingly, in the leaning vehicle of (5), the center of gravity of the rider sitting on the rider-only single seat is located near the rear wheel axle.

The above-described object of the invention and other objects, features, aspects and advantages will be apparent from detailed descriptions of embodiments of the invention made with reference to attached drawings.

As used herein, the term "and/or" includes any and all combinations of one or more of the associated listed items.

As used herein, the terms "including," "comprising" or "having" and variations thereof specify the presence of stated features, steps, operations, elements, components, and/or their equivalents but do not preclude the presence or addition of one or more other features, steps, operations, elements, components, and/or groups thereof.

Unless otherwise defined, all terms (including technical and scientific terms) used herein have the same meaning as commonly understood by one having ordinary skill in the art to which this invention belongs.

It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

In describing the invention, it will be understood that a number of techniques and steps are disclosed. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion.

In the following description, for purposes of explanation, numerous specific details are set forth in order to provide a thorough understanding of the present teaching. It will be evident, however, to one skilled in the art that the present teaching may be practiced without these specific details. The present disclosure is to be considered as an exemplification of the invention, and is not intended to limit the invention to the specific embodiments illustrated by the figures or description below. The scope of the invention is defined by the claims.

ADVANTAGEOUS EFFECTS OF INVENTION

According to the present teaching, a load capacity for a rear mounted load on a leaning vehicle can be increased while preventing the leaning vehicle from increasing in size, the leaning vehicle including a left front wheel, a right front wheel, a rear wheel, and a link mechanism, the link mechanism causing an axle of the left front wheel to be positioned further upward in a vehicle-body-frame upward direction than an axle of the right front wheel to lean a vehicle body frame in a leaning-vehicle leftward direction and causing the axle of the right front wheel to be positioned further upward in a vehicle-main-body upward direction than the axle of the left front wheel to lean a vehicle main body in a leaning-vehicle rightward direction.

BRIEF DESCRIPTION OF DRAWINGS

[FIG. 1] FIG. 1 is a view of a leaning vehicle 1 as seen from a vehicle-body-frame (21) leftward direction with a vehicle body frame 21 being upright.
[FIG. 2] FIG. 2 is a view of a front portion of the leaning vehicle 1 as seen from a vehicle-body-frame (21) frontward direction with the vehicle body frame 21 being upright.
[FIG. 3] FIG. 3 is a view of the front portion of the leaning vehicle 1 as seen from an upward direction u with the vehicle body frame 21 being upright.
[FIG. 4] FIG. 4 is a view of the front portion of the leaning vehicle 1 as seen from the upward direction u with the leaning vehicle 1 being steered to turn left.
[FIG. 5] FIG. 5 is a view of the front portion of the leaning vehicle 1 as seen from a frontward direction f with the vehicle body frame 21 leaning in a leftward direction L.
[FIG. 6] FIG. 6 is a view of the leaning vehicle 1 as seen from the upward direction u.
[FIG. 7] FIG. 7 is a view of the leaning vehicle 1 as seen from the leftward direction l with the vehicle body frame 21 being upright.
[FIG. 8] FIG. 8 is a schematic view of a leaning vehicle 1a as seen from the leftward direction l.
[FIG. 9] FIG. 9 is a schematic view of a leaning vehicle 1b as seen from the leftward direction l.
[FIG. 10] FIG. 10 is a schematic view of a rider-only single seat 24 and a carrying structure 80 of a leaning vehicle 1c as seen from the upward direction u.

DESCRIPTION OF EMBODIMENTS

[Overall Configuration]

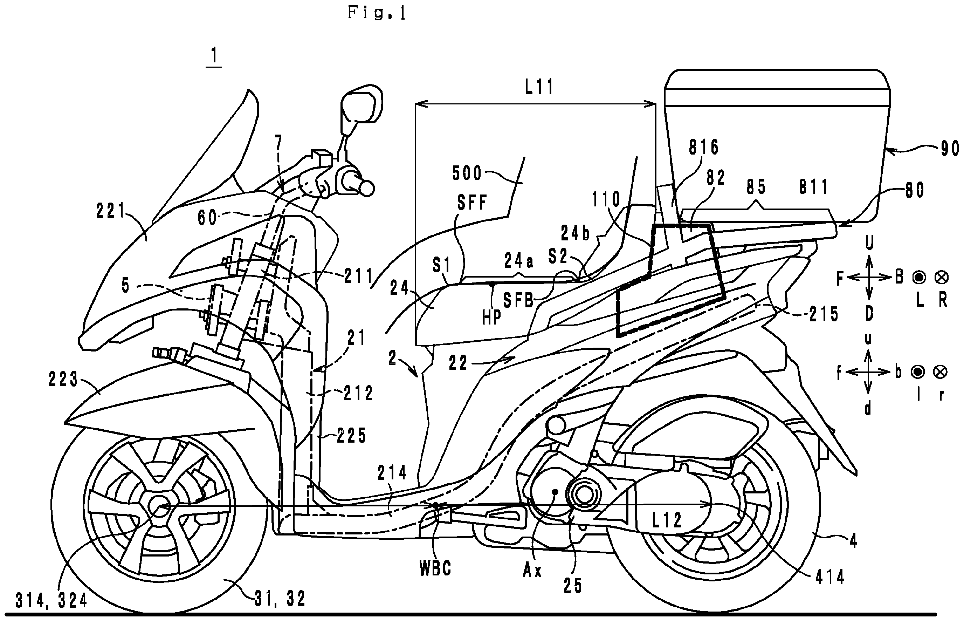

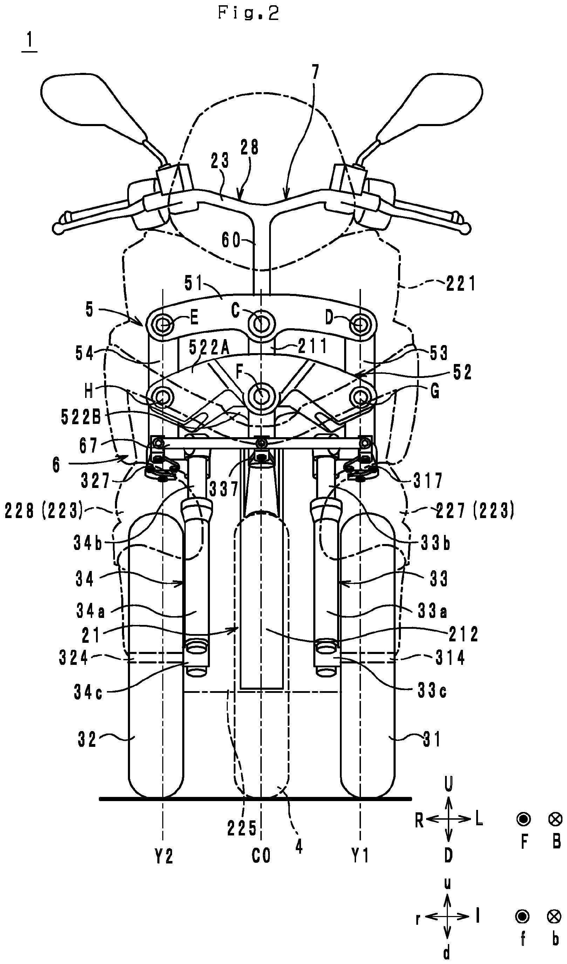

The overall configuration of a leaning vehicle 1 according to an embodiment will now be described with reference to FIGS. 1 and 2. In the embodiment, a three-wheeled vehicle that has a leanable vehicle body frame, two front wheels and one rear wheel is illustrated as an example of the leaning vehicle 1. FIG. 1 is a view of the leaning vehicle 1 as seen from the vehicle-body-frame (21) leftward direction with the vehicle body frame 21 being upright. FIG. 2 is a view of the front portion of the leaning vehicle 1 as seen from the vehicle-body-frame (21) frontward direction with the vehicle body frame 21 being upright. FIG. 2 illustrates a state in which the vehicle body 22 is transparent. Hereinafter, the leaning-vehicle (1) frontward direction is referred to as a frontward direction "F". The leaning-vehicle (1) backward direction is referred to as a backward direction "B". The leaning-vehicle (1) leftward direction is referred to as a leftward direction "L". The leaning-vehicle (1) rightward direction is referred to as a rightward direction "R". The leaning-vehicle (1) upward direction is referred to as an upward direction "U". The leaning-vehicle (1) downward direction is referred to as a downward direction "D". The leaning-vehicle (1) front-back direction is referred to as a front-back direction "FB". The leaning-vehicle (1) left-right direction is referred to as a left-right direction "LR". The leaning-vehicle (1) up-down direction is referred to as an up-down direction "UD". The leaning-vehicle (1) frontward direction refers to the traveling direction of the leaning vehicle 1. The leaning-vehicle (1) backward direction refers to a direction opposite to the traveling direction of the leaning vehicle 1. The leaning-vehicle (1) leftward direction refers to the leftward direction with respect to a rider who straddles the leaning vehicle 1. The leaning-vehicle (1) rightward direction refers to the rightward direction with respect to the rider who straddles the leaning vehicle 1. The leaning-vehicle (1) upward direction refers to the upward direction with respect to a rider who straddles the leaning vehicle 1. The leaning-vehicle (1) downward direction refers to the downward direction with respect to a rider who straddles the leaning vehicle 1.

Further, in the leaning vehicle 1, the vehicle body frame 21 can lean in the leftward direction L or the rightward direction R. When the vehicle body frame 21 leans in the leftward direction L or the rightward direction R, the vehicle-body-frame (21) up-down and left-right directions do not coincide with the leaning-vehicle (1) up-down direction UD and the leaning-vehicle (1) left-right direction LR, respectively. On the other hand, the vehicle-body-frame (21) up-down and left-right directions in an upright state coincide with the leaning-vehicle (1) up-down direction UD and the leaning-vehicle (1) left-right direction LR, respectively. Hereinafter, the vehicle-body-frame (21) frontward direction is referred to as a frontward direction "f". The vehicle-body-frame (21) backward direction is referred to as a backward direction "b". The vehicle-body-frame (21) leftward direction is referred to as a leftward direction "l". The vehicle-body-frame (21) rightward direction is referred to as a rightward direction "r". The vehicle-body-frame (21) upward direction is referred to as an upward direction "u". The vehicle-body-frame (21) downward direction is referred to as a downward direction "d". The vehicle-body-frame (21) front-back direction is referred to as a front-back direction "fb". The vehicle-body-frame (21) left-right direction is referred to as a left-right direction "lr". The vehicle-body-frame (21) up-down direction is referred to as an up-down direction "ud".

Hereinafter, an upper end of a component denotes an end of the top portion of the component. A lower end of a component denotes an end of the bottom portion of the component. A front end of a component denotes an end of the front of the component. The rear end of a component denotes an end of the rear of the component. The left end of a component denotes an end of the left of the component. The right end of a component denotes an end of the right of the component. The upper end portion of a component denotes the upper end and its vicinity of the component. The lower end portion of a component denotes the lower end and its vicinity of the component. The front end portion of a component denotes the front end and its vicinity of the component. The rear end portion of a component denotes the rear end and its vicinity of the component. The left end portion of a component denotes the left end and its vicinity of the component. The right end portion of a component denotes the right end and its vicinity of the component. The component denotes the leaning vehicle 1 and a member constituting the leaning vehicle 1.

An axis or a member extending in the front-back direction does not necessarily refer to only an axis or a member that is in parallel with the front-back direction. An axis or a member extending in the front-back direction refers to an axis or a member that is inclined within a range of $\pm 45°$ with respect to the front-back direction. Similarly, an axis or a member extending in the up-down direction refers to an axis or a member that is inclined within a range of $\pm 45°$ with respect to the up-down direction. An axis or a member extending in the left-right direction refers to an axis or a member that is inclined within a range of $\pm 45°$ with respect to the left-right direction. Further, an "upright" state of the vehicle body frame 21 means a state in which the front wheels are not steered nor leaning while no rider is riding on nor no fuel is stored in the leaning vehicle 1.

As used herein, a phrase "a first member is supported by a second member" includes both a case in which the first member is attached to (i.e. fixed to) the second member unmovably with respect to the second member and a case in which the first member is attached to the second member movably with respect to the second member. Further, a phrase "a first member is supported by a second member" includes both a case in which the first member is directly attached to the second member and a case in which the first member is attached to the second member with an intervening third member.

As illustrated in FIG. 1, the leaning vehicle 1 includes a vehicle main body section 2, a left front wheel 31 (see FIG. 2), a right front wheel 32 (see FIG. 2), a rear wheel 4, a link mechanism 5, and a steering mechanism 7. The vehicle main body section 2 includes the vehicle body frame 21, the vehicle body cover 22, the rider-only single seat 24, and the power unit 25.

The vehicle body frame 21 leans in the leftward direction L in turning left. The vehicle body frame 21 leans in the rightward direction R in turning right. The vehicle body frame 21 includes a headpipe 211, a downframe 212, an underframe 214, and a rearframe 215. In FIG. 1, portions of the vehicle body frame 21 hidden by the vehicle body cover 22 are illustrated in dashed lines. The vehicle body frame 21 supports the rider-only single seat 24, the power unit 25, and the like.

The headpipe 211 is disposed in the front portion of the leaning vehicle 1. The front portion of the leaning vehicle 1 refers to a portion located further frontward than the front end of the rider-only single seat 24 in the frontward direction f in the leaning vehicle 1. The rear portion of the leaning vehicle 1 refers to a portion located further backward than the front end of the rider-only single seat 24 in the backward direction b in the leaning vehicle 1. When the vehicle body frame 21 is seen from the leftward direction l or the rightward direction r, the headpipe 211 is inclined with respect to the up-down direction ud such that the upper end portion of the headpipe 211 is located further backward than the lower end portion of the headpipe 211 in the backward direction b. The steering mechanism 7 and the link mechanism 5 are disposed around the headpipe 211. A steering shaft 60 of the steering mechanism 7 is rotatably inserted in the headpipe 211. The link mechanism 5 is supported by the headpipe 211.

The downframe 212 is disposed further backward than the headpipe 211 in the backward direction b. The downframe 212 has a cylindrical shape extending in the up-down direction ud. The upper end portion of the downframe 212 is located behind the lower end portion of the headpipe 211 in the backward direction b. Further, the upper end portion of the downframe 212 is fixed to the lower end portion of the headpipe 211 by an unillustrated connection.

The underframe 214 extends from the lower end portion of the downframe 212 in the backward direction b and the upward direction u. The rearframe 215 extends from the rear end of the underframe 214 in the backward direction b and the upward direction u.

The vehicle body frame 21 is covered with the vehicle body cover 22. The vehicle body cover 22 includes a front cover 221, a front fender pair 223 of right and left front fenders, and a leg shield 225. The front cover 221 is located in front of the rider-only single seat 24 in the frontward direction f. The front cover 221 covers at least part of the steering mechanism 7 and at least part of the link mechanism 5.

The power unit 25 includes the engine, a transmission, and the like. The power unit 25 generates a driving force to rotate the rear wheel 4. The engine has a crankshaft. The central axis of rotation of the crankshaft is a central axis Ax extending in the left-right direction lr.

As illustrated in FIG. 2, the left front wheel 31 is disposed further leftward in the leftward direction l than the center C0 of the vehicle body frame 21 in the left-right direction lr. The left front wheel 31 is rotatable around the left-front-wheel axle 314. As illustrated in FIG. 2, the right front wheel 32 is disposed further rightward in the rightward direction r than the center C0 of the vehicle body frame 21 in the left-right direction lr. The right front wheel 32 is rotatable around the right-front-wheel axle 324. The left front wheel 31 and the right front wheel 32 are symmetrically disposed with respect to the center C0.

The front fender pair 223 includes a left front fender 227 and a right front fender 228. The left front fender 227 is disposed above the left front wheel 31 in the upward direction u. The right front fender 228 is disposed above the right front wheel 32 in the upward direction u.

The rear wheel 4 is disposed further backward than the left front wheel 31 and the right front wheel 32 in the backward direction b. The rear wheel 4 is rotatable around the rear wheel axle 414. The rear wheel 4 is rotated by a driving force generated by the power unit 25.

The rider-only single seat 24 is disposed between the left-front-wheel axle 314 or the right-front-wheel axle 324 and the rear wheel axle 414 in the front-back direction fb. Further, when the leaning vehicle 1 is seen from the leftward direction l or the rightward direction r, the rider-only single seat 24 is disposed above the central axis Ax in the upward direction u. The rider-only single seat 24 is supported by the vehicle body frame 21. The rider-only single seat 24 is a seat only for a rider 500 who steers the steering mechanism 7 described later to sit. Accordingly, the rider-only single seat 24 is designed to have a short length in the front-back direction fb. Specifically, a length L11 of the rider-only single seat 24 in the front-back direction fb is shorter than a length L12 from a wheelbase center WBC to the rear wheel axle 414 in the front-back direction fb. The wheelbase center WBC refers to a central point between the left-front-wheel axle 314 or the right-front-wheel axle 324 and the rear wheel axle 414 in the front-back direction fb.

The rider-only single seat 24 includes a seating surface 24a and a back rest 24b. The seating surface 24a is an area that pushes the hip of the rider 500 in the upward direction u. Accordingly, the seating surface 24a is a plane facing the upward direction u. However, the seating surface 24a may not be completely flat but may be substantially flat. Accordingly, the seating surface 24a may have a slightly curved shape or a slightly textured shape for slip resistance. However, the distance between the upper end of the seating surface 24a and the lower end of the seating surface 24a in the up-down direction ud is equal to or less than 5 cm. Further, the normal of the seating surface 24a may not coincide with the upward direction u. The normal of the seating surface 24a refers to a normal of a plane that includes the front end of the seating surface 24a (hereinafter referred to as "seating surface front end SFF") and the rear end of the seating surface 24a (hereinafter referred to as "seating surface rear end SFB") and that is in parallel with the left-right direction lr. The normal of the seating surface 24a may be inclined with respect to the upward direction u to the extent that the rider 500 can sit. Specifically, the normal of the seating surface 24a may for example be inclined forward up to 10° with respect to the upward direction u.

Here, description will be made as to the seating surface front end SFF and the seating surface rear end SFB. In the rider-only single seat 24, an arcuate surface S1 is arranged in front of the seating surface 24a in the frontward direction f. The seating surface front end SFF corresponds to the rear end of the arcuate surface S1. Further, in the rider-only single seat 24, an arcuate surface S2 is arranged behind the seating surface 24a in the backward direction b. The seating surface rear end SFB corresponds to the front end of the arcuate surface S2. Further, the back rest 24b is a portion located further backward than the front end of arcuate surface S2 in the backward direction b in the rider-only single seat 24. The back rest 24b supports the rider 500 in his/her hip from the backward direction b.

A point where a hip joint of the rider 500 is located when the rider 500 is sitting on the rider-only single seat 24 is referred to as a hip point HP. When seen from the leftward direction l, the hip point HP is located 20 cm behind the front end of seating surface 24a of the rider-only single seat 24 in the backward direction b.

Only rider 500 sits on the seating surface 24a. Accordingly, the seating surface 24a is designed to have a short length in the front-back direction fb. Specifically, the length of the seating surface 24a in the front-back direction fb is in a range of 20 cm or more and 45 cm or less, for example. Further, the rider-only single seat 24 includes only one seating surface 24a without including a plurality of seating surfaces. The reference to a plurality of seating surfaces means that two or more adjacent planes in the front-back direction fb are disposed at different levels in the up-down direction ud. The length of one of the two or more planes in the front-back direction fb is equal to or larger than 10 cm. The length of the upper surface of the back rest 24b in the front-back direction is shorter than 10 cm. As such, the upper surface of the back rest 24b is not included in the two or more planes.

As described above, the rider-only single seat 24 does not allow a passenger to sit. Further, the leaning vehicle 1 is provided with no other seats than the rider-only single seat 24. Accordingly, the seating capacity of the leaning vehicle 1 is one person. For example, the seating capacity of the leaning vehicle 1 can be confirmed in an instruction manual or an automobile inspection certificate.

[Steering Mechanism]

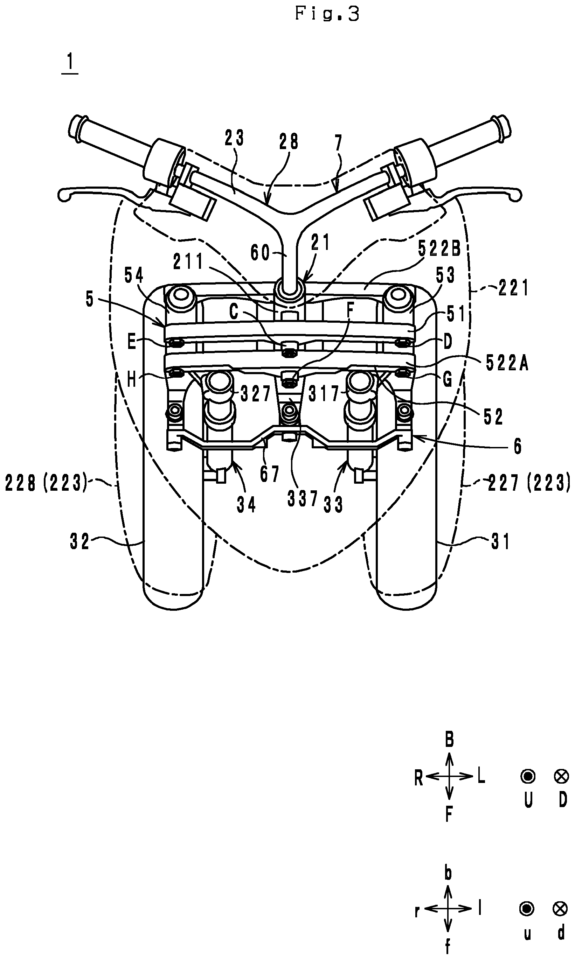

The steering mechanism 7 will now be described with reference to FIGS. 2 and 3. FIG. 3 is a view of the front portion of the leaning vehicle 1 as seen from an upward direction u with the vehicle body frame 21 being upright. FIG. 3 illustrates a state in which the vehicle body cover 22 is transparent.

The steering mechanism 7 steers the left front wheel 31 and the right front wheel 32. As illustrated in FIGS. 2 and 3, the steering mechanism 7 includes a steering force transmitting mechanism 6, a left shock absorber 33, and a right shock absorber 34.

The left shock absorber 33 movably supports the left front wheel 31 with respect to the vehicle body frame 21 in the up-down direction ud. The left shock absorber 33 includes a left lower portion 33a, a left upper portion 33b, and a left support portion 33c. The left lower portion 33a extends in the up-down direction ud. The left support portion 33c is disposed in the lower end portion of the left lower portion 33a. The left support portion 33c rotatably supports the left front wheel 31. The left front wheel 31 is rotatable around the left-front-wheel axle 314 as the central axis. The left-front-wheel axle 314 extends from the left support portion 33c in the leftward direction l. The left upper portion 33b extends in the up-down direction ud. The left upper portion 33b is disposed above the left lower portion 33a in the upward direction u with the vicinity of the lower end of the left upper portion 33b being inserted in the left lower portion 33a. The upper end portion of the left upper portion 33b is fixed to a left bracket 317 described later. In other words, the left upper portion 33b is supported by a left side member 53 described later.

The left shock absorber 33 is a so-called telescopic type shock absorber. For example, the left shock absorber 33 is made up of a combination of a damper and a spring. The left upper portion 33b moves relative to the left lower portion 33a in the direction in which the left lower portion 33a extends, and correspondingly the left shock absorber 33 extends and contracts in the same direction. In this way, the left shock absorber 33 buffers displacement of the left front wheel 31 with respect to the left upper portion 33b in the up-down direction ud.

The right shock absorber 34 movably supports the right front wheel 32 with respect to the vehicle body frame 21 in the up-down direction ud. The right shock absorber 34 includes a right lower portion 34a, a right upper portion 34b, and a right support portion 34c. The right lower portion 34a extends in the up-down direction ud. The right support portion 34c is disposed in the lower end portion of the right lower portion 34a. The right support portion 34c rotatably supports the right front wheel 32. The right front wheel 32 is rotatable around the right-front-wheel axle 324 as the central axis. The right-front-wheel axle 324 extends from the right support portion 34c in the rightward direction r. The right upper portion 34b extends in the up-down direction ud. The right upper portion 34b is disposed above the right lower portion 34a in the upward direction u with the vicinity of the lower end of the right upper portion 34b being inserted in the right lower portion 34a. The upper end portion of the right upper portion 34b is fixed to a right bracket 327 described later. In other words, the right upper portion 34b is supported by a right side member 54 described later.

The right shock absorber 34 is a so-called telescopic type shock absorber. For example, the right shock absorber 34 is made up of a combination of a damper and a spring. The right upper portion 34b moves relative to the right lower portion 34a in the direction in which the right lower portion 34a extends, and correspondingly the right shock absorber 34 extends and contracts in the same direction. In this way, the right shock absorber 34 buffers displacement of the right front wheel 32 with respect to the right upper portion 34b in the up-down direction ud.

The steering force transmitting mechanism 6 is disposed further upward than the left front wheel 31 and the right front wheel 32 in the upward direction u. The steering force transmitting mechanism 6 includes a steering member 28, a tie rod 67, a left bracket 317, a right bracket 327, and a central bracket 337. The steering member 28 is a member for inputting a steering force from the rider. The steering member 28 includes a steering shaft 60 and a handlebar 23. The handlebar 23 is coupled to the upper portion of the steering shaft 60. The steering shaft 60 is rotatably supported by the vehicle body frame 21. The lower end portion of the steering shaft 60 is located further frontward than the upper end portion of the steering shaft 60 in the frontward direction f. Part of the steering shaft 60 is inserted in the headpipe 211. Further, the steering shaft 60 extends in the up-down direction ud. As a result, the steering shaft 60 is rotatable around the central axis of the steering shaft 60 extending in the up-down direction ud. The steering shaft 60 is rotated as the rider manipulates the handlebar 23. The central bracket 337 is fixed to the lower end portion of the steering shaft 60. As such, the central bracket 337 is rotatable around the central axis of the steering shaft 60 along with the steering shaft 60.

The tie rod 67 transmits the rotation of the steering shaft 60 by the handlebar 23 being manipulated to the left shock absorber 33 and the right shock absorber 34. The tie rod 67 extends in the left-right direction LR. The tie rod 67 is supported in the center thereof in the left-right direction LR by the central bracket 337. The left end portion of the tie rod 67 is supported by the left bracket 317. The right end portion of the tie rod 67 is supported by the right bracket 327.

[Link Mechanism]

The link mechanism 5 will now be described with reference to FIGS. 2 and 3. The link mechanism 5 is a parallelogram linkage link mechanism. The link mechanism 5 is located further downward than the handlebar 23 in the downward direction d. The link mechanism 5 is supported by the headpipe 211 of the vehicle body frame 21.

The link mechanism 5 includes an upper cross member 51, a lower cross member 52, a left side member 53, and a right side member 54. The upper cross member 51, the lower cross member 52, the left side member 53, and the right side member 54 constitute a plurality of link members displaceable with respect to the vehicle body frame 21. The reference to displacement herein includes displacement caused by translation, displacement caused by rotational movement, and displacement caused by a combination of translation and rotational movement.

The upper cross member 51 extends in the left-right direction LR. The upper cross member 51 is disposed in front of the headpipe 211 in the frontward direction f and disposed further upward than the left front wheel 31 and the right front wheel 32 in the upward direction u. The upper cross member 51 is supported by a support portion C on the headpipe 211. The support portion C is located at the intermediate portion of the upper cross member 51 and the upper portion of headpipe 211. The left portion of the upper cross member 51 refers to a leftmost portion in the leftward direction L when the upper cross member 51 is trisected in the left-right direction LR. The right portion of the upper cross member 51 refers to a rightmost portion in the rightward direction R when the upper cross member 51 is trisected in the left-right direction LR. The intermediate portion of the upper cross member 51 refers to the center portion when the upper cross member 51 is trisected in the left-right direction LR. The upper portion of the headpipe 211 corresponds to the upper half of the headpipe 211. The lower portion of the headpipe 211 corresponds to the lower half of the headpipe 211. The support portion C corresponds to an axis extending in the front-back direction fb. The support portion C is slightly inclined in the upward direction u and extends from the headpipe 211 in the frontward direction f. The upper cross member 51 is rotatable around the support portion C as the central axis with respect to the headpipe 211.

The lower cross member 52 has a front lower cross member 522A and a rear lower cross member 522B. The front lower cross member 522A extends in the left-right direction LR. The front lower cross member 522A is disposed in front of the headpipe 211 in the frontward direction f and disposed further downward than the upper cross member 51 in the downward direction d and further upward than the left front wheel 31 and the right front wheel 32 in the upward direction u. The front lower cross member 522A is supported by a support portion F on the headpipe 211. The support portion F is located at the intermediate portion of the front lower cross member 522A and the lower portion of the headpipe 211. The left portion of the front lower cross member 522A refers to a leftmost portion in the leftward direction L when the front lower cross member 522A is trisected in the left-right direction LR. The right portion of the front lower cross member 522A refers to a rightmost portion in the rightward direction R when the front lower cross member 522A is trisected in the left-right direction LR. The intermediate portion of the front lower cross member 522A refers to the center portion when the front lower cross member 522A is trisected in the left-right direction LR. The support portion F corresponds to an axis extending in the front-back direction fb. The support portion F is slightly inclined in the upward direction u and extends from the headpipe 211 in the frontward direction f. The front lower cross member 522A is rotatable around the support portion F as the central axis with respect to the headpipe 211.

The rear lower cross member 522B extends in the left-right direction LR. The rear lower cross member 522B is disposed behind the headpipe 211 in the backward direction b and disposed further downward than the upper cross member 51 in the downward direction d and further upward than the left front wheel 31 and the right front wheel 32 in the upward direction u. The rear lower cross member 522B is supported by a support portion F on the headpipe 211. The support portion F is located at the intermediate portion of the rear lower cross member 522B and the lower portion of the headpipe 211. The left portion of the rear lower cross member 522B refers to a leftmost portion in the leftward direction L when the rear lower cross member 522B is trisected in the left-right direction LR. The right portion of the rear lower cross member 522B refers to a rightmost portion in the rightward direction R when the rear lower cross member 522B is trisected in the left-right direction LR. The intermediate portion of the rear lower cross member 522B refers to the center portion when the rear lower cross member 522B is trisected in the left-right direction LR. As described above, the support portion F corresponds to an axis extending in the front-back direction fb. However, the support portion F is also slightly inclined in the downward direction d and extends from the headpipe 211 in the backward direction b. The rear lower cross member 522B is rotatable around the support portion F as the central axis with respect to the headpipe 211.

The left side member 53 extends in the up-down direction ud. Accordingly, the direction in which the left side member 53 extends is in parallel with the direction in which the headpipe 211 extends. The left side member 53 is disposed to the left of the headpipe 211 in the leftward direction l. The left side member 53 is disposed above the left front wheel 31 in the upward direction u and disposed above the left shock absorber 33 in the upward direction u. The left side member 53 is supported by the support portion D on the upper cross member 51. The support portion D is located at the upper portion of the left side member 53 and the left portion of the upper cross member 51. In the left side member 53, the upper portion of the left side member 53 corresponds to the upper half of the left side member 53. The lower portion of the left side member 53 corresponds to the lower half of the left side member 53. The support portion D corresponds to an axis extending in the front-back direction fb. The left side member 53 is rotatable around the support portion D as the central axis with respect to the upper cross member 51.

Further, the left side member 53 is supported by the support portion G on the front lower cross member 522A and the rear lower cross member 522B. The support portion G is located at the lower portion of the left side member 53, the left portion of the front lower cross member 522A, and the left portion of the rear lower cross member 522B. The support portion G corresponds to an axis extending in the front-back direction fb. The left side member 53 is rotatable around the support portion G as the central axis with respect to the front lower cross member 522A and the rear lower cross member 522B.

The left bracket 317 is supported by the left side member 53 in the lower end portion thereof. The left bracket 317 is rotatable around a left central axis Y1 as the central axis with respect to the left side member 53. The left central axis Y1 corresponds to the central axis of the left side member 53. Accordingly, the left central axis Y1 extends in the up-down direction ud.

The right side member 54 extends in the up-down direction ud. Accordingly, the direction in which the right side member 54 extends is in parallel with the direction in which the headpipe 211 extends. The right side member 54 is disposed to the right of the headpipe 211 in the rightward direction r. The right side member 54 is disposed above the right front wheel 32 in the upward direction u and disposed above the right shock absorber 34 in the upward direction u. The right side member 54 is supported by the support portion E on the upper cross member 51. The support portion E is located at the upper portion of the right side member 54 and the right portion of the upper cross member 51. In the right side member 54, the upper portion of the right side member 54 corresponds to the upper half of the right side member 54. The lower portion of the right side member 54 corresponds to the lower half of the right side member 54. The support portion E corresponds to an axis extending in the front-back direction fb. The right side member 54 is rotatable around the support portion E as the central axis with respect to the upper cross member 51.

Further, the right side member 54 is supported by a support portion H on the front lower cross member 522A and the rear lower cross member 522B. The support portion H is located at the lower portion of the right side member 54, the right portion of the front lower cross member 522A, and the right portion of the rear lower cross member 522B. The support portion H corresponds to an axis extending in the front-back direction fb. The right side member 54 is rotatable around the support portion H as the central axis with respect to the front lower cross member 522A and the rear lower cross member 522B.

The right bracket 327 is supported by the right side member 54 in the lower end portion thereof. The right bracket 327 is rotatable around a right central axis Y2 as the central axis with respect to the right side member 54. The right central axis Y2 corresponds to the central axis of the right side member 54. Accordingly, the right central axis Y2 extends in the up-down direction ud.

As described above, the upper cross member 51, the lower cross member 52, the left side member 53, and the right side member 54 are coupled such that the upper cross member 51 and the lower cross member 52 keep a mutually parallel arrangement and the left side member 53 and the right side member 54 keep a mutually parallel arrangement.

Further, the left shock absorber 33 is disposed below the left side member 53 in the downward direction d. The left shock absorber 33 is supported by the left bracket 317. Specifically, the upper end portion of the left shock absorber 33 is fixed to the left bracket 317. Further, the left shock absorber 33 supports the left front wheel 31. Consequently, the left side member 53 supports the left front wheel 31 via the left bracket 317 and the left shock absorber 33. In other words, the link mechanism 5 supports the left front wheel 31. The left shock absorber 33 thus configured leans in the left-right direction LR along with the left side member 53.

Further, the right shock absorber 34 is disposed below the right side member 54 in the downward direction d. The right shock absorber 34 is supported by the right bracket 327. Specifically, the upper end portion of the right shock absorber 34 is fixed to the right bracket 327. Further, the right shock absorber 34 supports the right front wheel 32. Consequently, the right side member 54 supports the right front wheel 32 via the right bracket 327 and the right shock absorber 34. In other words, the link mechanism 5 supports the right front wheel 32. The right shock absorber 34 thus configured leans in the left-right direction LR along with the right side member 54.

[Steering Action]

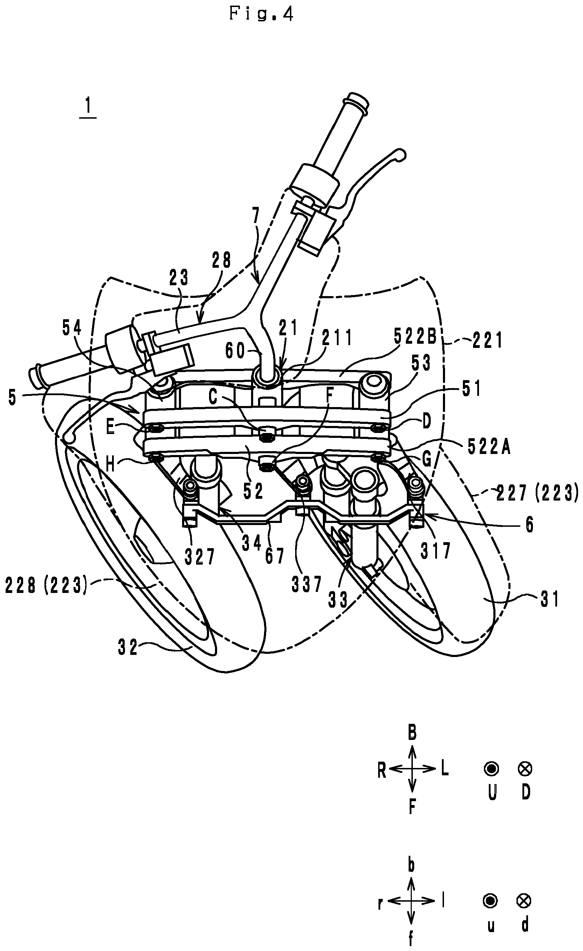

The steering action of the leaning vehicle 1 will now be described with reference to FIG. 4. FIG. 4 is a view of the front portion of the leaning vehicle 1 as seen from the upward direction u with the leaning vehicle 1 being steered to turn left.

As illustrated in FIG. 4, when the rider operates the handlebar 23 to turn left, the steering shaft 60 rotates in the counterclockwise direction when the leaning vehicle 1 is seen from the upward direction u. The central bracket 337, which is fixed to the lower end portion of the steering shaft 60, rotates in the counterclockwise direction along with the steering shaft 60 when the leaning vehicle 1 is seen from the upward direction u.

The tie rod 67 translates in the leftward direction l and the backward direction b as the central bracket 337 rotates. The left end portion of the tie rod 67 is supported by the left bracket 317 in the front end portion thereof. The left bracket 317 is rotatable around the left central axis Y1 (see FIG. 2). As such, the left bracket 317 rotates in the counterclockwise direction as the tie rod 67 translates, when the leaning vehicle 1 is seen from the upward direction u. Further, the right end portion of the tie rod 67 is supported by the right bracket 327 in the front end portion thereof. The right bracket 327 is rotatable around the right central axis Y2 (see FIG. 2). As such, the right bracket 327 rotates in the counterclockwise direction as the tie rod 67 translates, when the leaning vehicle 1 is seen from the upward direction u.

The left front wheel 31 is connected to the left bracket 317 via the left shock absorber 33. As such, the left front wheel 31 rotates around the left central axis Y1 (see FIG. 2) in the counterclockwise direction as the left bracket 317 rotates when the leaning vehicle 1 is seen from the upward direction u. The right front wheel 32 is connected to the right bracket 327 via the right shock absorber 34. As such, the right front wheel 32 rotates around the right central axis Y2 (see FIG. 2) in the counterclockwise direction as the right bracket 327 rotates when the leaning vehicle 1 is seen from the upward direction u.

When the rider operates the handlebar 23 to turn right, the above-described components each rotate in the opposite direction (that is, clockwise direction) to the case when the handlebar 23 is operated to turn left. Since the components only move in reverse, further explanation will be omitted.

[Leaning Action]

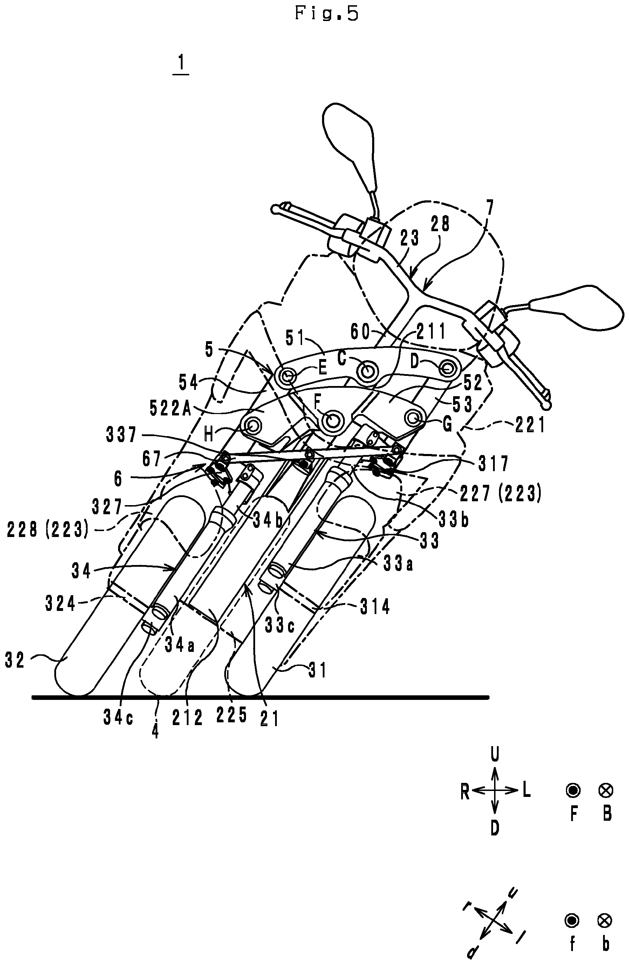

The leaning action for the leaning vehicle 1 will now be described with reference to FIG. 5. FIG. 5 is a view of the front portion of the leaning vehicle 1 as seen from a frontward direction f with the vehicle body frame 21 leaning in a leftward direction L.

As illustrated in FIG. 5, the upper cross member 51, the lower cross member 52, the left side member 53, and the right side member 54 are displaced relative to the vehicle body frame 21 such that the left-front-wheel axle 314 is located further upward than the right-front-wheel axle 324 in the upward direction u. In this way, the link mechanism 5 causes the vehicle body frame 21 to lean in the leftward direction L in turning left. Further, the upper cross member 51, the lower cross member 52, the left side member 53, and the right side member 54 are displaced relative to the vehicle body frame 21 such that the right-front-wheel axle 324 is located further upward than the left-front-wheel axle 314 in the upward direction u. In this way, the link mechanism 5 causes the vehicle body frame 21 to lean in the rightward direction R in turning right. Hereinafter, a case in which the vehicle body frame 21 leans in the leftward direction L will be explained as an example.

As illustrated in FIG. 5, the formation of the link mechanism 5 changes to cause the vehicle body frame 21 in the upright state to lean in the leftward direction L. Specifically, as illustrated in FIG. 2, in the leaning vehicle 1, the vehicle body frame 21 of which is upright, the upper cross member 51, the lower cross member 52, the left side member 53, and the right side member 54 form rectangular. On the other hand, as illustrated in FIG. 5, in the leaning vehicle 1, the vehicle body frame 21 of which is leaning in the leftward direction L, the upper cross member 51, the lower cross member 52, the left side member 53, and the right side member 54 form a parallelogram.

When the rider causes the vehicle body frame 21 to lean in the leftward direction L, the headpipe 211 leans in the leftward direction L. When the headpipe 211 leans in the leftward direction L, the upper cross member 51 rotates in the counterclockwise direction around the support portion C as the central axis with respect to the headpipe 211 when the leaning vehicle 1 is seen from the frontward direction f. Similarly, the lower cross member 52 rotates in the counterclockwise direction around the support portion F as the central axis with respect to the headpipe 211 when the leaning vehicle 1 is seen from the frontward direction f. In this way, the upper cross member 51 moves in the leftward direction L with respect to the lower cross member 52 when the leaning vehicle 1 is seen from the frontward direction f.

The movement of the upper cross member 51 causes the left side member 53 to rotate in the clockwise direction around the support portion D as the central axis with respect to the upper cross member 51 when the leaning vehicle 1 is seen from the frontward direction f. Similarly, the right side member 54 rotates in the clockwise direction around the support portion E as the central axis with respect to the upper cross member 51 when the leaning vehicle 1 is seen from the frontward direction f. Further, the movement of the upper cross member 51 causes the left side member 53 to rotate in the clockwise direction around the support portion G as the central axis with respect to the lower cross member 52 when the leaning vehicle 1 is seen from the frontward direction f. Similarly, the right side member 54 rotates in the clockwise direction around the support portion H as the central axis with respect to the lower cross member 52 when the leaning vehicle 1 is seen from the frontward direction f. In this way, the left side member 53 and the right side member 54 leans in the leftward direction L while remaining parallel with the headpipe 211.

The left bracket 317 is supported by the left side member 53 in the lower end portion thereof. As such, as the left side member 53 leans in the leftward direction L, the left bracket 317 leans in the leftward direction L. The left shock absorber 33, which is supported by the left bracket 317, leans in the leftward direction L as the left bracket 317 leans in the leftward direction L. The left front wheel 31, which is supported by the left shock absorber 33 in the lower end portion thereof, leans in the leftward direction L as the left shock absorber 33 leans in the leftward direction L.

The right bracket 327 is supported by the right side member 54 in the lower end portion thereof. As such, as the right side member 54 leans in the leftward direction L, the right bracket 327 leans in the leftward direction L. The right shock absorber 34, which is supported by the right bracket 327, leans in the leftward direction L as the right bracket 327 leans in the leftward direction L. The right front wheel 32, which is supported by the right shock absorber 34 in the lower end portion thereof, leans in the leftward direction L as the right shock absorber 34 leans in the leftward direction L.

The rear wheel 4 is supported by the vehicle body frame 21. Consequently, the rear wheel 4 leans in the leftward direction L along with the vehicle body frame 21.

The above description relating to the leaning action of the left front wheel 31 and the right front wheel 32 has been made with reference to the vertical direction. However, during the leaning action of the leaning vehicle 1 (the link mechanism 5 in action), the vehicle-body-frame (21) up-down direction ud and the vertical up-down direction do not coincide. With reference to the vehicle-body-frame (21) up-down direction ud, when the link mechanism 5 is actuated, the left front wheel 31 and the right front wheel 32 are subjected to a change in relative position in the vehicle-body-frame (21) up-down direction ud. In other words, the link mechanism 5 changes the relative position between the left front wheel 31 and the right front wheel 32 in the vehicle-body-frame (21) up-down direction ud to cause the vehicle body frame 21 to lean in the leftward direction L or the rightward direction R.

When the vehicle body frame 21 leans in the rightward direction R, the above-described components each move in the opposite direction to the case when the vehicle body frame 21 leans in the leftward direction L. Since the components only move in reverse, further explanation will be omitted.

[Carrying structure Section]

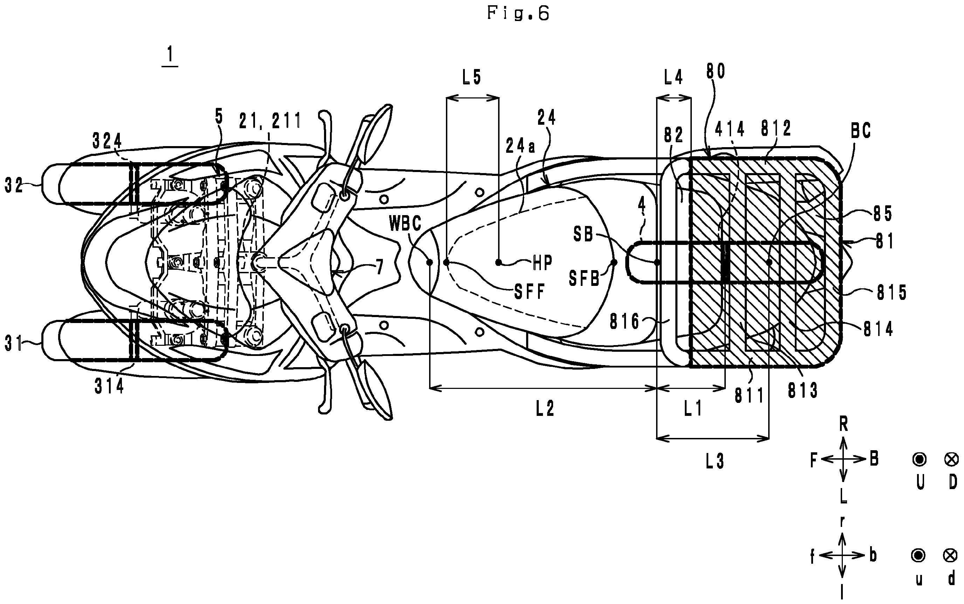

The carrying structure 80 will now be described with reference to FIGS. 1 and 6. FIG. 6 is a view of the leaning vehicle 1 as seen from the upward direction u. In FIG. 6, a rear mounted load 90 is not illustrated.

The leaning vehicle 1 further includes the carrying structure 80. The carrying structure 80 includes a rear carrier 81 and a storage box 82. The storage box 82 is a cuboid-shaped box made of resin. The storage box 82 is disposed behind the rider-only single seat 24 in the backward direction b. The storage box 82 is supported by the vehicle body frame 21.

As illustrated in FIG. 6, the rear carrier 81 has a ladder shape as seen from the upward direction u. The rear carrier 81 is supported by the vehicle body frame 21. The rear carrier 81 includes a left portion 811, a right portion 812, coupling portions 813, 814, 815, and a stopper portion 816. The left portion 811 is provided to the left of the rider-only single seat 24 and the storage box 82 in the leftward direction l. The left portion 811 extends in the front-back direction fb. However, as illustrated in FIG. 1, the left portion 811 is inclined such that the rear end of the left portion 811 is located slightly upward than the front end of the left portion 811 in the upward direction u. The rear end of the left portion 811 is located near the rear end of the rear wheel 4 in the front-back direction fb. The right portion 812 is provided to the right of the rider-only single seat 24 and the storage box 82 in the rightward direction r. The right portion 812 extends in the front-back direction fb. However, the right portion 812 is inclined such that the rear end of the right portion 812 is located slightly upward than the front end of the right portion 812 in the upward direction u. The rear end of the right portion 812 is located near the rear end of the rear wheel 4 in the front-back direction fb.

As illustrated in FIG. 6, the coupling portion 813 is disposed behind the storage box 82 in the backward direction b. The coupling portion 813 extends in the left-right direction lr. The left end of the coupling portion 813 is connected to the left portion 811. The right end of the coupling portion 813 is connected to the right portion 812.

As illustrated in FIG. 6, the coupling portion 814 is disposed behind the coupling portion 813 in the backward direction b. The coupling portion 814 extends in the left-right direction lr. The left end of the coupling portion 814 is connected to the left portion 811. The right end of the coupling portion 814 is connected to the right portion 812.

As illustrated in FIG. 6, the coupling portion 815 is disposed behind the coupling portion 814 in the backward direction b. The coupling portion 815 extends in the left-right direction lr. The left end of the coupling portion 815 is connected to the rear end of the left portion 811. The right end of the coupling portion 815 is connected to the rear end of the right portion 812.

As illustrated in FIG. 6, the stopper portion 816 has an upside down "U" shape when the stopper portion 816 is seen from the backward direction b. The stopper portion 816 surrounds the storage box 82 on three sides from the leftward direction l, the upward direction u, and the rightward direction r when the stopper portion 816 is seen from the backward direction b. The left end of the stopper portion 816 is connected to the left portion 811. The right end of the stopper portion 816 is connected to the right portion 812.

The carrying structure 80 has a carrying section 85. The carrying section 85 is disposed further backward than the rider-only single seat 24 in the backward direction b. As illustrated in FIG. 1, the carrying section 85 is loaded with the rear mounted load 90. The rear mounted load 90 refers to a cuboid storage box and an article stored in the storage box. The rear mounted load 90 is attachable and removable to and from the carrying structure 80. The carrying section 85 is a portion where the bottom surface of the rear mounted load 90 faces in the carrying structure 80. The bottom surface of the rear mounted load 90 is brought into contact with the rear carrier 81 and the storage box 82. The storage box 82 supports the front end portion of the bottom surface of rear mounted load 90. The coupling portion 815 of the rear carrier 81 supports the rear portion of the bottom surface of the storage box 82. The front portion of the bottom surface of the storage box 82 corresponds to the front half of the bottom surface of the storage box 82. The rear portion of the bottom surface of the storage box 82 corresponds to the rear half of the bottom surface of the storage box 82. Further, the stopper portion 816 supports the front surface of the rear mounted load 90. Consequently, as illustrated in FIG. 6, the carrying section 85 corresponds to a portion located further backward than the stopper portion 816 in the carrying structure 80 in the backward direction b when the carrying structure 80 is seen from the upward direction u.

[Positional Relation Between Components]

The positional relation between components of the leaning vehicle 1 will now be described with reference to FIG. 6. To begin with, define L1 to L5 as follows.

L1: distance in the front-back direction fb from the rear end of the rider-only single seat 24 (hereinafter referred to as "seat rear end SB") to the rear wheel axle 414;

L2: distance in the front-back direction fb from the rear end of the rider-only single seat 24 (seat rear end SB) to a wheelbase center WBC located at the center between the left-front-wheel axle 314 or the right-front-wheel axle 324 and the rear wheel axle 414 in the front-back direction fb;

L3: distance in the front-back direction fb from the rear end of the rider-only single seat 24 (seat rear end SB) to the center of the carrying section 85 in the front-back direction fb (hereinafter referred to as "carrying section center BC");

L4: distance in the front-back direction fb from the rear end of the rider-only single seat 24 (seat rear end SB) to the front end of the carrying section 85; and

L5: distance in the front-back direction fb from the front end of the seating surface 24a (seating surface front end SFF) that allows the rider 500 (not illustrated in FIG. 6) to sit in the rider-only single seat to a hip point HP of the rider 500 sitting on the rider-only single seat 24.

When the vehicle body frame 21 is upright, the following Formulae (a), (b), and (c) hold. The vehicle body frame 21 that is upright is in the state in which the link mechanism 5 causes the left-front-wheel axle 314 and the right-front-wheel axle 324 to be at a same level in the up-down direction ud and the left front wheel 31, right front wheel 32, and the rear wheel 4 are grounded on a level ground. With the vehicle body frame 21 being upright, only the weight of the leaning vehicle 1 is exerted on the left front, right front and rear wheels 31, 32 and 4. Accordingly, no rider 500 is riding on, no fuel is stored in, nor no rear mounted load 90 is carried on the leaning vehicle 1.

$$L1 < L2 \ldots (a)$$

$$L3 < L2 \ldots (b)$$

$$L4 < L5 \ldots (c)$$

[Storage Space]

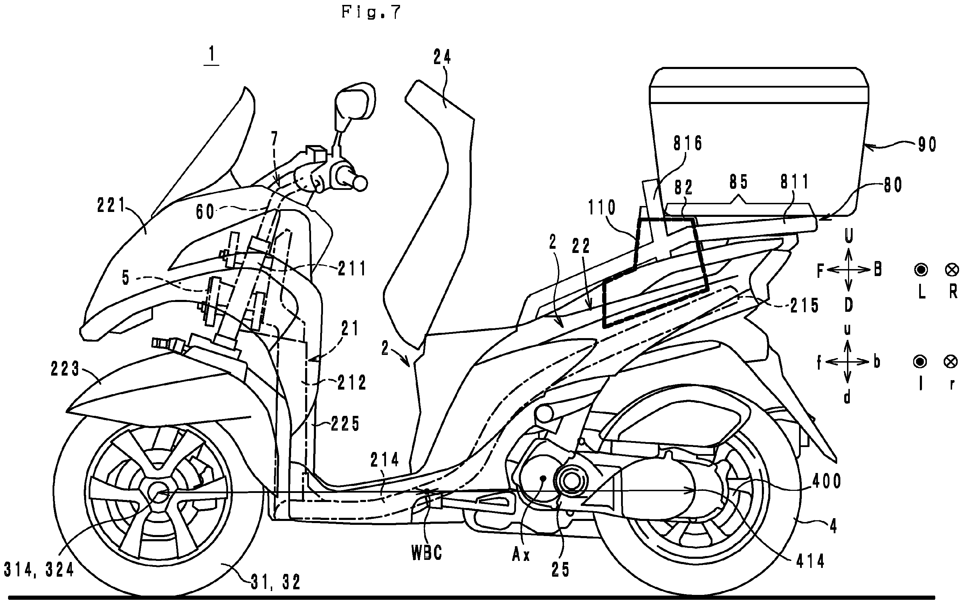

A storage space 110 will now be described with reference to FIGS. 1 and 7. FIG. 7 is a view of the leaning vehicle 1 as seen from the leftward direction l with the vehicle body frame 21 being upright. In FIG. 7, the storage space 110 is exposed to the outside of the leaning vehicle 1.

As illustrated in FIG. 1, the leaning vehicle 1 is provided with the storage space 110 below and behind the rider-only single seat 24 in the downward direction d and the backward direction b. Specifically, the storage box 82 is disposed behind the rider-only single seat 24 in the backward direction b. The inside of the storage box 82 is an empty space. An empty space is also provided below the rear portion of the rider-only single seat 24 in the downward direction d. The two empty spaces are connected with each other to form the storage space 110. The storage space 110 is a space for storing, for example, items such as a helmet.

The rider-only single seat 24 is rotatable around an axis located in the front end portion of the rider-only single seat 24 as the central axis. As illustrated in FIG. 1, a state in which the storage space 110 is not exposed to the outside of the leaning vehicle 1 corresponds to the closed state of the rider-only single seat 24. In the closed state, the rider 500 cannot put or take out a load in or from the storage space 110. When the rider-only single seat 24 in the closed state is rotated in the counterclockwise direction when the leaning vehicle 1 is seen from the leftward direction l, the storage space 110 is exposed to the outside of the leaning vehicle 1, as illustrated in FIG. 7. As illustrated in FIG. 7, a state in which the storage space 110 is exposed to the outside of the leaning vehicle 1 corresponds to the open state of the rider-only single seat 24. In the open state, the rider 500 can put in or take out a load in or from the storage space 110.

A load that cannot be put in or taken out from the storage space 110 without the rider 500 operating the rider-only single seat 24 is referred to as a storage load in distinction from the rear mounted load 90. The rear mounted load 90 is a load that can be put in or taken out without the rider 500 operating the rider-only single seat 24. Therefore, the rear mounted load 90 does not include the storage load that cannot be put in or taken out from the storage space 110 without operating the rider-only single seat 24.

[Advantageous Effects]

According to the leaning vehicle 1, the load capacity for the rear mounted load 90 can be increased while preventing the leaning vehicle 1 from increasing in size. Specifically, in the leaning vehicle 1, when the vehicle body frame 21 is upright, the distance L1 in the front-back direction fb from the seat rear end SB to the rear wheel axle 414 is shorter than the distance L2 in the front-back direction fb from the seat rear end SB to the wheelbase center WBC. In other words, the rear end SB is resultantly located in a rear half from the wheelbase, and thus the rider-only single seat 24 is located near the rear wheel axle 414. In this way, the center of gravity of the rider 500 sitting on the rider-only single seat 24 is located near the rear wheel axle 414.

Further, in the leaning vehicle 1, when the vehicle body frame 21 is upright, the distance L3 in the front-back direction fb from the seat rear end SB to the carrying section center BC is shorter than the distance L2 in the front-back direction fb from the seat rear end SB to the wheelbase center WBC. In other words, the rider-only single seat 24 is located near the carrying section 85. In this way, the center of gravity of the rider 500 sitting on the rider-only single seat 24 is located near the center of gravity of the rear mounted load 90 carried on the carrying section 85. As described above, since the center of gravity of the rider 500 sitting on the rider-only single seat 24 is located near the rear wheel axle 414, the center of gravity of the rear mounted load 90 carried on the carrying section 85 is also located near the rear wheel axle 414.

As described above, in the leaning vehicle 1, the center of gravity of the rider 500 sitting on the rider-only single seat 24 and the center of gravity of the rear mounted load 90 carried on the carrying section 85 is located near the rear wheel axle 414. Accordingly, most of the weight of the rider 500 and the rear mounted load 90 is applied to the rear wheel 4. As a result, the rate of variation of the weight applied to the rear wheel 4 between the carrying state in which the rear mounted load 90 is carried and the non-carrying state in which the rear mounted load 90 is not carried is reduced.

Further, the distance L4 in the front-back direction fb from the seat rear end SB to the front end of the carrying section 85 is shorter than the distance L5 in the front-back direction fb from the seating surface front end SFF to the hip point HP of the rider 500 sitting on the rider-only single seat 24. The distance L5 in the front-back direction fb from the seating surface front end SFF to the hip point HP of the rider 500 sitting on the rider-only single seat 24 corresponds to a space where one person can sit. Accordingly, in the leaning vehicle 1, there is no space where one person can sit between the seat rear end SB and the front end of the carrying section 85. As such, the carrying section 85 is disposed behind the seat rear end SB with almost no wasteful space. As a result, in the leaning vehicle 1, a larger amount of rear mounted load 90 can be carried without increasing the size of the leaning vehicle 1.

According to the leaning vehicle 1, since the storage space 110 is provided below the rider-only single seat 24 in the downward direction d, a storage load can be stored in the storage space 110.

Further, in the leaning vehicle 1, the length L 11 of the rider-only single seat 24 in the front-back direction fb is shorter than the length L12 from the wheelbase center WBC to the rear wheel axle 414 in the front-back direction fb. In this way, only the rider 500 is allowed to sit but no passenger is allowed to sit on the rider-only single seat 24.

Further, in the leaning vehicle 1, the center of gravity of the rider 500 sitting on the rider-only single seat 24 is located near the rear wheel axle 414 for the following reasons. In the leaning vehicle 1, when the leaning vehicle 1 is seen from the leftward direction l or the rightward direction r, the rider-only single seat 24 is disposed above the central axis Ax of rotation of the crankshaft of the power unit 25, as the engine, in the upward direction u. Accordingly, the distance between the rider-only single seat 24 and the power unit 25 is short in the front-back direction fb. The power unit 25 is disposed near the rear wheel 4. As a result, the distance between the rider-only single seat 24 and the rear wheel axle 414 is short in the front-back direction fb. Accordingly, in the leaning vehicle 1, the center of gravity of the rider 500 sitting on the rider-only single seat 24 is located near the rear wheel axle 414.

(First Variation)

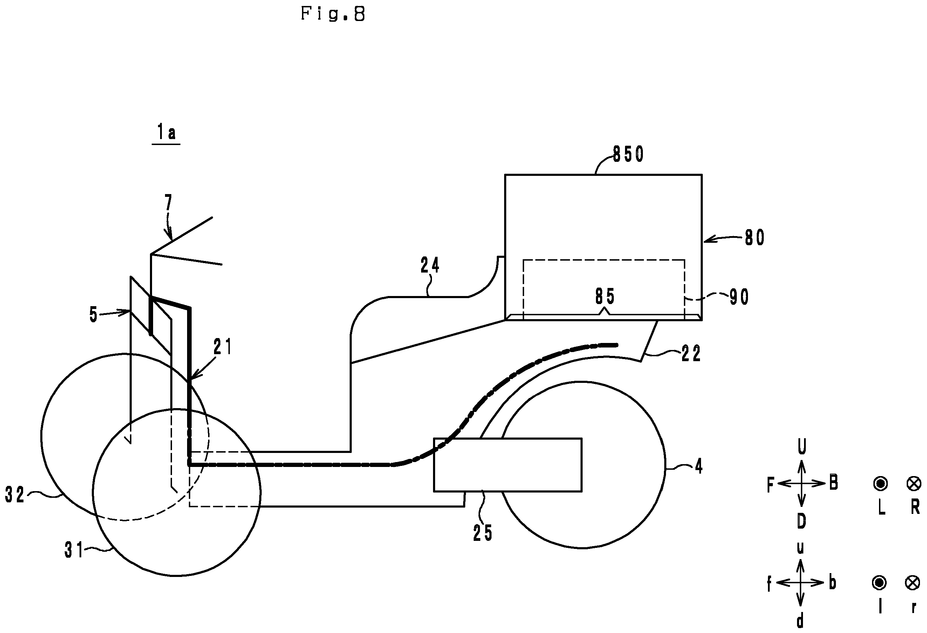

A leaning vehicle 1a according to a first variation will now be described with reference to FIG. 8. FIG. 8 is a schematic view of the leaning vehicle 1a as seen from the leftward direction l. In FIG. 8, to facilitate the understanding of the leaning vehicle 1a being provided with the left front wheel 31 and the right front wheel 32, the left front wheel 31 and the right front wheel 32 are illustrated in a displaced manner. Further, in FIG. 8, the components are not drawn to scale because of their simplified representations.

The leaning vehicle 1a is different from the leaning vehicle 1 in the structure of the carrying structure 80. Specifically, in the leaning vehicle 1, the rear mounted load 90, which is a storage box, is carried on the carrying structure 80. On the other hand, the carrying structure 80 of the leaning vehicle 1a is a cuboid storage box 850 integrated with a vehicle body cover 22. The rear mounted load 90 is stored in the storage box 850. At this time, the rear mounted load 90 is carried on the bottom surface among inner peripheral surfaces in the storage box 850. Accordingly, in the leaning vehicle 1a, the carrying section 85 corresponds to the bottom surface among inner peripheral surfaces in the storage box 850. The rest of the configuration of the leaning vehicle 1a is similar to that of the leaning vehicle 1, and thus explanation thereof will be omitted.

(Second Variation)

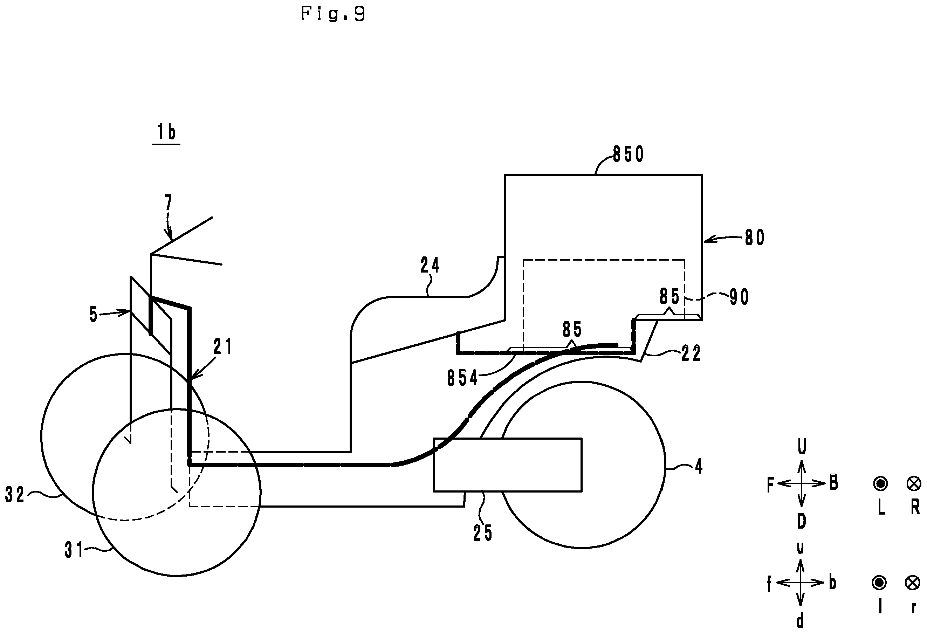

A leaning vehicle 1b according to a second variation will now be described with reference to FIG. 9. FIG. 9 is a schematic view of a leaning vehicle 1b as seen from the leftward direction l. In FIG. 9, to facilitate understanding of the leaning vehicle 1b being provided with the left front wheel 31 and the right front wheel 32, the left front wheel 31 and the right front wheel 32 are illustrated in a displaced manner. Further, in FIG. 9, the components are not drawn to scale because of their simplified representations.

The leaning vehicle 1b is different from the leaning vehicle 1a in the structure of the carrying structure 80. Specifically, the carrying structure 80 of the leaning vehicle 1b includes a cuboid storage box 850 integrated with a vehicle body cover 22. Further, the carrying structure 80 of the leaning vehicle 1b includes a vehicle-body-storage portion 854 provided below the storage box 850 in the downward direction d and below the rider-only single seat 24 in the downward direction d in the leaning vehicle 1a. The storage box 850 lacks the front portion of the bottom surface thereof, and thereby the space in the storage box 850 is connected with the space in the vehicle-body-storage portion 854.

The rear mounted load 90 is stored in the carrying structure 80. At this time, the rear mounted load 90 is carried on the bottom surface among inner peripheral surfaces in the carrying structure 80. Accordingly, in the leaning vehicle 1b, the carrying section 85 corresponds to the bottom surface among inner peripheral surfaces in the carrying structure 80. In other words, the carrying section 85 corresponds to the bottom surface among inner peripheral surfaces of the storage box 850 and the bottom surface among inner peripheral surfaces of the vehicle-body-storage portion 854. However, the carrying section 85 is disposed behind the rider-only single seat 24 in the backward direction b. Accordingly, the carrying section 85 does not include a portion located below the rider-only single seat 24 in the downward direction d in the bottom surface among inner peripheral surfaces of the carrying structure 80 (more particularly, the bottom surface among inner peripheral surfaces of the vehicle-body-storage portion 854). The rest of the configuration of the leaning vehicle 1b is similar to that of the leaning vehicle 1a, and thus explanation thereof will be omitted.

(Third Variation)

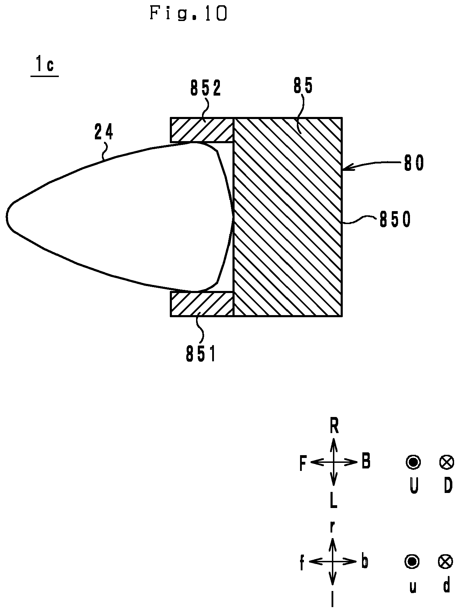

A leaning vehicle 1c according to a third variation will now be described with reference to FIG. 10. FIG. 10 is a schematic view of the rider-only single seat 24 and the carrying structure 80 of the leaning vehicle 1c as seen from the upward direction u. In FIG. 10, the configuration except for that of the rider-only single seat 24 and the carrying structure 80 is omitted. Further, in FIG. 10, the components are not drawn to scale because of their simplified representations.

The leaning vehicle 1c is different from the leaning vehicle 1a in the structure of the carrying structure 80. Specifically, the carrying structure 80 of the leaning vehicle 1c includes a left protrusion 851 and a right protrusion 852 in addition to the storage box 850. The left protrusion 851 protrudes from the left end portion of the storage box 850 in the frontward direction f. The left protrusion 851 is disposed to the left of the rear portion of the rider-only single seat 24 in the leftward direction l.

The front portion of the rider-only single seat 24 corresponds to the front half of the rider-only single seat 24. The rear portion of the rider-only single seat 24 corresponds to the rear half of the rider-only single seat 24. In this way, the left protrusion 851 prevents the rider 500 (not illustrated in FIG. 10) from displacing from the rider-only single seat 24 in the leftward direction l. The inside of the left protrusion 851 is an empty space. The space in the left protrusion 851 is connected with the space in the storage box 850.

The right protrusion 852 protrudes from the right end portion of the storage box 850 in the frontward direction f. The right protrusion 852 is disposed to the right of the rear portion of the rider-only single seat 24 in the rightward direction r. In this way, the right protrusion 852 prevents the rider 500 (not illustrated in FIG. 10) from displacing from the rider-only single seat 24 in the rightward direction r. The inside of the right protrusion 852 is an empty space. The space in the right protrusion 852 is connected with the space in the storage box 850.

The rear mounted load 90 (not illustrated in FIG. 10) is stored in the carrying structure 80. At this time, the rear mounted load 90 is carried on the bottom surface among inner peripheral surfaces in the carrying structure 80. Accordingly, in the leaning vehicle 1c, the carrying section 85 corresponds to the bottom surface among inner peripheral surfaces of the carrying structure 80. However, the carrying section 85 is disposed behind the rider-only single seat 24 in the backward direction b. Accordingly, the carrying section 85 includes the bottom surface among inner peripheral surfaces of the storage box 850, and does not include the bottom surface among inner peripheral surfaces of the left protrusion 851 and the bottom surface among inner peripheral surfaces of the right protrusion 852. The rest of the configuration of the leaning vehicle 1c is similar to that of the leaning vehicle 1a, and thus explanation thereof will be omitted.

(Other not claimed Embodiments)

The embodiments for which at least one of description and illustration in the drawings is made in the specification are intended to facilitate the understanding of the present disclosure, and are not intended for limitation on the disclosed ideas.

Limitations in claims should be interpreted broadly based on terms used in the claims, and should not be limited to the embodiments described in this specification and during the prosecution of this application. Such embodiments should be interpreted as non-exclusive. For example, in the specification, the terms "preferably" and "may be" are non-exclusive and mean "preferably, but not limited to" and "may be, but not limited to", respectively.

The terms and expressions as used herein are for illustrative purposes only and not for limiting interpretation. It should be appreciated that any equivalents to the features illustrated and described in the specification are not excluded and any variations that fall into the scope of claims are encompassed.

The present teaching can be embodied in various different forms. It should be considered that the specification provides a principle of the present teaching. It bases on the understanding that preferable embodiments for which at least one of description and illustration in the drawings is made in the specification are not intended to limit the present teaching to the embodiments.

In the leaning vehicles 1 and 1a to 1c, the center of rear wheel 4 in the left-right direction lr coincides with the center between the left front wheel 31 and the right front wheel 32 in the left-right direction lr. However, the center of rear wheel 4 in the left-right direction lr may not be coincide with the center between the left front wheel 31 and the right front wheel 32 in the left-right direction lr.

In the leaning vehicles 1 and 1a to 1c, the link mechanism 5 is disposed above the left front wheel 31 and the right front wheel 32 in the upward direction u. However, the link mechanism 5 may be disposed between the left front wheel 31 and the right front wheel 32. In other words, when the link mechanism 5 is seen from the leftward direction l or the rightward direction r, the link mechanism 5 overlaps the left front wheel 31 and the right front wheel 32. In this case, the left side member 53 also functions as the left shock absorber 33. Further, the right side member 54 also functions as right shock absorber 34.

In the leaning vehicles 1 and 1a to 1c, the link mechanism 5 is a parallelogram linkage link mechanism. However, the link mechanism 5 may be a link mechanism of a double wishbone type.

In the leaning vehicles 1 and 1a to 1c, the upper cross member 51 is a single plate-like member, and the lower cross member 52 includes the front lower cross member 522A and the rear lower cross member 522B. However, the upper cross member 51 may include a front upper cross member and a rear upper cross member. Further, the lower cross member 52 may be a single plate-like member. At least one of the upper cross member 51 and the lower cross member 52 may include a left plate-like member supported by the headpipe 211 and the left side member 53 and a right plate-like member supported by the headpipe 211 and the right side member 54.

In the leaning vehicles 1 and 1a to 1c, the handlebar 23 is made up of a single member extending in the left-right direction LR. However, the handlebar 23 may have a configuration in which a left handlebar section operated by the rider 500 with his/her left hand and a right handlebar section operated by the rider 500 with his/her right hand are separately provided insofar as a steering force for rotating the left front wheel 31 and the right front wheel 32 can be input.

In the leaning vehicles 1 and 1a to 1c, the link mechanism 5 is supported by the headpipe 211, which is an example of the link support portion. However, the link mechanism 5 may be supported by other portions than the headpipe 211 in the vehicle body frame 21.

The power unit 25 is supported by the vehicle body frame 21. Accordingly, the power unit 25 may be fixed directly by the vehicle body frame 21 or may be fixed to a swing arm rotatably supported by the vehicle body frame 21.

Further, instead of the engine, the power unit 25 of the leaning vehicles 1 and 1a to 1c may be a combination of an electric motor and a battery. In this case, the rider-only single seat 24 may be located above a rotating shaft of the electric motor and the battery in the upward direction u.

In the leaning vehicles 1 and 1a to 1c, in turning left, the left front wheel 31, the right front wheel 32, the vehicle body frame 21, and the rear wheel 4 lean in the leftward direction L. In turning right, the left front wheel 31, the right front wheel 32, the vehicle body frame 21, and the rear wheel 4 lean in the rightward direction R. In this way, the rear wheel 4 leans along with the vehicle body frame 21 in the leftward direction L or the rightward direction R. Accordingly, the leaning vehicles 1 and 1a to 1c do not include a type of vehicle in which the vehicle body frame 21 twists in turning left or turning right and thereby the rear wheel 4 does not lean.

The distance L4 in the front-back direction fb from the seat rear end SB to the front end of the carrying section 85 may be zero. In other words, the seat rear end SB and the carrying section 85 may be in contact with each other in the front-back direction fb.

In the leaning vehicle 1, the rear carrier 81 is made from a metal pipe. However, the structure of the rear carrier 81 is not limited to that illustrated in FIG. 6. The rear carrier 81 may be made from a wood sheet, a metal sheet, a resin sheet, or other materials.

REFERENCE SIGNS LIST

1, 1a-1c: LEANING VEHICLE
4: REAR WHEEL
5: LINK MECHANISM
7: STEERING MECHANISM
21: VEHICLE BODY FRAME
24: RIDER-ONLY SINGLE SEAT
24a: SEATING SURFACE
24b: BACK REST
25: POWER UNIT
28: STEERING MEMBER
31: LEFT FRONT WHEEL
32: RIGHT FRONT WHEEL
51: UPPER CROSS MEMBER
52: LOWER CROSS MEMBER
53: LEFT SIDE MEMBER
54: RIGHT SIDE MEMBER
80: CARRYING STRUCTURE
81: REAR CARRIER
82: STORAGE BOX

85: CARRYING SECTION
90: REAR MOUNTED LOAD
110: STORAGE SPACE
211: HEADPIPE
314: LEFT-FRONT-WHEEL AXLE
324: RIGHT-FRONT-WHEEL AXLE
414: REAR WHEEL AXLE
500: RIDER
811: LEFT PORTION
812: RIGHT PORTION
813-815: COUPLING PORTION
816: STOPPER PORTION
850: STORAGE BOX
851: LEFT PROTRUSION
852: RIGHT PROTRUSION
854: VEHICLE-BODY-STORAGE PORTION
Ax: CENTRAL AXIS
BC: CARRYING SECTION CENTER
HP: HIP POINT
SB: SEAT REAR END
SFF: SEATING SURFACE FRONT END
WBC: WHEELBASE CENTER

## Claims

1. A leaning vehicle comprising:

   a vehicle body frame (21) that leans in a leaning-vehicle leftward direction (L) in turning left and leans in a leaning-vehicle rightward direction (R) in turning right;
   a left front wheel (31) disposed further leftward in a vehicle-body-frame leftward direction (l) than a center (C0) of the vehicle-body-frame in a vehicle-body-frame left-right direction (lr), the left front wheel (31) being rotatable around a left-front-wheel axle (314);
   a right front wheel (32) disposed further rightward in a vehicle-body-frame rightward direction (r) than a center (C0) of the vehicle-body-frame (21) in the vehicle-body-frame left-right direction (lr), the right front wheel (32) being rotatable around a right-front-wheel axle (324);
   a link mechanism (5) that supports the left front wheel (31) and the right front wheel (32), the link mechanism (5) allowing the left-front-wheel axle (314) to be located further upward in a vehicle-body-frame upward direction (u) than the right-front-wheel axle (324) to lean the vehicle body frame (21) in the leaning-vehicle leftward direction (L) in turning left, the link mechanism (5) allowing the right-front-wheel axle (324) to be located further upward in the vehicle-body-frame upward direction (u) than the left-front-wheel axle (314) to lean the vehicle body frame (21) in the leaning-vehicle rightward direction (R) in turning right;

a rear wheel (4) disposed further backward in a vehicle-body-frame backward direction (b) than the left front wheel (31) and the right front wheel (32) and rotatable around a rear wheel axle (414), the rear wheel (4) being caused to lean along with the vehicle body frame (21) in the leaning-vehicle leftward direction (L) in turning left and to lean along with the vehicle body frame (21) in the leaning-vehicle rightward direction (R) in turning right;

a steering mechanism (7) for steering the left front wheel (31) and the right front wheel (32);

a rider-only single seat (24) supported by the vehicle body frame (21), the rider-only single seat (24) being only for a rider (500) who steers the steering mechanism (7) to sit;

a carrying section (85) disposed further backward in the vehicle-body-frame backward direction (b) than the rider-only single seat (24), the carrying section (85) being loaded with a rear mounted load (90) thereon, and

a storage space (110) provided below the rider-only single seat (24) in the vehicle-body-frame downward direction (d), and

the rider-only single seat (24) is capable of assuming a closed state in which the storage space (110) is not exposed to outside of the leaning vehicle and an open state in which the storage space (110) is exposed to outside of the leaning vehicle,

wherein in a state in which the link mechanism (5) causes the left-front-wheel axle (314) and the right-front-wheel axle (324) to be at a same level in a vehicle-body-frame up-down direction (ud) and the left front wheel (31), the right front wheel (32), and the rear wheel (4) are grounded, Formulae (a), (b), and (c) hold:

$$L1 < L2 \ ... \ (a)$$

$$L3 < L2 \ ... \ (b)$$

$$L4 < L5 \ ... \ (c)$$

where L1 is defined as a distance in a vehicle-body-frame front-back direction (fb) from a rear end (SB) of the rider-only single seat (24) to the rear wheel axle (414),

L2 is defined as a distance in the vehicle-body-frame front-back direction (fb) from the rear end (SB) of the rider-only single seat (24) to a wheelbase center (WBC) located at a center between the left-front-wheel axle (314) or the right-front-wheel axle (324) and the rear wheel axle (414) in the vehicle-body-frame front-back direction (fb),

L3 is defined as a distance in the vehicle-body-frame front-back direction (fb) from the rear end (SB) of the rider-only single seat (24) to a center of the carrying section (85) in the vehicle-body-frame front-back direction (fb),

L4 is defined as a distance in the vehicle-body-frame front-back direction (fb) from the rear end (SB) of the rider-only single seat (24) to a front end of the carrying section (85), and

L5 is defined as a distance in the vehicle-body-frame front-back direction (fb) from a front end (SFF) of an only one seating surface (24a) that allows the rider (500) to sit in the rider-only single seat (24) to a hip point (HP) of the rider (500) sitting on the rider-only single seat (24).

2. The leaning vehicle according to Claim 1, wherein the vehicle body frame (21) includes a link support portion (211), and the link mechanism (5) includes: an upper cross member (51) disposed further upward in the vehicle-body-frame upward direction (u) than the left front wheel (31) and the right front wheel (32), the upper cross member (51) being rotatably supported in an intermediate portion thereof by an upper portion of the link support portion (211); a lower cross member (52) disposed further downward in a vehicle-body-frame downward direction (d) than the upper cross member (51) and further upward in the vehicle-body-frame upward direction (u) than the left front wheel (31) and the right front wheel (32), the lower cross member (52) being rotatably supported in an intermediate portion thereof by a lower portion of the link support portion (211); a left side member (53) rotatably supported in an upper portion thereof by a left portion of the upper cross member (51), the left side member (53) being rotatably supported in a lower portion thereof by a left portion of the lower cross member (52); and a right side member (54) rotatably supported in an upper portion thereof by a right portion of the upper cross member (51), the right side member (54) being rotatably supported in a lower portion thereof by a right portion of the lower cross member (52),

the left front wheel (31) is supported by the left side member (53), and the right front wheel (32) is supported by the right side member (54).

3. The leaning vehicle according to Claim 1 or 2, wherein a length (L11) of the rider-only single seat (24) in the vehicle-body-frame front-back direction (fb) is shorter than a length (L12) from the wheelbase center (WBC) to the rear wheel axle (414) in the vehicle-body-frame front-back direction (fb).

4. The leaning vehicle according to any one of Claims 1 to 3, further comprising an engine for generating a driving force to rotate the rear wheel (4), the engine having a crankshaft, wherein, when the engine is seen from the vehicle-body-frame leftward or rightward direction (l,r), the rider-only single seat (24) is disposed above a central axis (Ax) of rotation of the crankshaft in the vehicle-body-frame upward direction (u).

**Patentansprüche**

1. Ein Neigefahrzeug, das umfasst:

einen Fahrzeugkörperrahmen (21), der sich beim Linksabbiegen in eine Fahrzeug-Neigungs-Links-Richtung (L) neigt und beim Rechtsabbiegen in eine Fahrzeug-Neigungs-Rechts-Richtung (R) neigt;

ein linkes Vorderrad (31), das in einer Fahrzeugkörperrahmen-Links-Richtung (l) weiter links angeordnet ist als ein Mittelpunkt (C0) des Fahrzeugkörperrahmens in einer Fahrzeugkörperrahmen-Links-Rechts-Richtung (lr), wobei das linke Vorderrad (31) um eine Links-Vorderrad-Achse (314) drehbar ist;

ein rechtes Vorderrad (32), das in einer Fahrzeugkörperrahmen-Rechts-Richtung (r) weiter rechts angeordnet ist als ein Mittelpunkt (C0) des Fahrzeugkörperrahmens (21) in der Fahrzeugkörperrahmen-Links-Rechts-Richtung (lr), wobei das rechte Vorderrad (32) um eine Rechts-Vorderrad-Achse (324) drehbar ist;

einen Verbindungsmechanismus (5), der das linke Vorderrad (31) und das rechte Vorderrad (32) trägt, der Verbindungsmechanismus (5) erlaubt es der Links-Vorderrad-Achse (314), in einer Fahrzeugkörperrahmen-Aufwärtsrichtung (u) weiter oben angeordnet zu sein als die Rechts-Vorderrad-Achse (324), um den Fahrzeugkörperrahmen (21) beim Linksabbiegen in die Fahrzeug-Neigungs-Links-Richtung (L) zu neigen, der Verbindungsmechanismus (5) erlaubt es der Rechts-Vorderrad-Achse (324), in der Fahrzeugkörperrahmen-Aufwärtsrichtung (u) weiter oben angeordnet zu sein als die Links-Vorderrad-Achse (314), um den Fahrzeugkörperrahmen (21) beim Rechtsabbiegen in die Fahrzeug-Neigungs-Rechts-Richtung (R) zu neigen;

ein Hinterrad (4), das in einer Rückwärtsrichtung (b) des Fahrzeugkörperrahmens weiter hinten angeordnet ist als das linke Vorderrad (31) und das rechte Vorderrad (32) und um eine Hinterradachse (414) drehbar ist, das Hinterrad (4) wird veranlasst, sich beim Linksabbiegen zusammen mit dem Fahrzeugkörperrahmen (21) in der Fahrzeug-Neigungs-Links-Richtung (L) nach links zu neigen und beim Rechtsabbiegen zusammen mit dem Fahrzeugkörperrahmen (21) in der Fahrzeug-Neigungs-Rechts-Richtung (R) nach rechts zu neigen;

einen Lenkmechanismus (7) zum Lenken des linken Vorderrads (31) und des rechten Vorderrads (32);

einen Nur-Fahrer-Einzelsitz (24), der von dem Fahrzeugkörperrahmen (21) getragen wird, wobei der Nur-Fahrer-Einzelsitz (24) nur für einen Fahrer (500), der den Lenkmechanismus (7) lenkt, zum Sitzen bestimmt ist;

einen Tragabschnitt (85), der in der Rückwärtsrichtung (b) des Fahrzeugkörperrahmens weiter hinten angeordnet ist als der Nur-Fahrer-Einzelsitz (24), der Tragabschnitt (85) ist mit einer hinten angebrachten Last (90) beladen ist, und einen Stauraum (110), der unterhalb des Nur-Fahrer-Einzelsitzes (24) in Fahrzeugkörperrahmen-Abwärtsrichtung (d) vorgesehen ist, und der Nur-Fahrer-Einzelsitz (24) in der Lage ist, einen geschlossenen Zustand einzunehmen, in dem der Stauraum (110) nicht zur Außenseite des Neigefahrzeugs hin offen ist, und einen offenen Zustand, in dem der Stauraum (110) zur Außenseite des Neigefahrzeugs hin offen ist, wobei in einem Zustand, in dem der Verbindungsmechanismus (5) bewirkt, dass sich die Links-Vorderrad-Achse (314) und die Rechts-Vorderrad-Achse (324) in einer Fahrzeugkörperrahmen-Aufwärts-Abwärts-Richtung (ud) auf demselben Niveau befinden und das linke Vorderrad (31), das rechte Vorderrad (32) und das Hinterrad (4) auf dem Boden sind, die Formeln (a), (b) und (c) gelten:

$$L1 < L2 \ ... \ (a)$$

$$L3 < L2 \ ... \ (b)$$

$$L4 < L5 \ ... \ (c)$$

wobei L1 definiert ist als ein Abstand in einer Fahrzeugkörperrahmen-Vorder-Rück-Richtung (fb) von einem hinteren Ende (SB) des Nur-Fahrer-Einzelsitzes (24) zur Hinterradachse (414),

L2 ist definiert als ein Abstand in der Fahrzeugkörperrahmen-Vorder-Rück-Richtung (fb) vom hinteren Ende (SB) des Nur-Fahrer-Einzelsitzes (24) bis zu einem Radstandsmittelpunkt (WBC), der in der Mitte zwischen der Links-Vorderrad-Achse (314) oder der Rechts-Vorderrad-Achse (324) und der Hinterradachse (414) liegt,

L3 ist definiert als ein Abstand in der Fahrzeugkörperrahmen-Vorder-Rück-Richtung (fb) vom hinteren Ende (SB) des Nur-Fahrer-Einzelsitz (24) bis zur Mitte des Trageteils (85) in der vorderen Rückwärtsrichtung (fb) des Fahrzeugkörperrahmens,

L4 ist definiert als ein Abstand in der Fahrzeugkörperrahmen-Vorder-Rück-Richtung (fb) vom hinteren Ende (SB) des Nur-Fahrer-Einzelsitzes (24) zu einem vorderen Ende des Trageteils (85), und

L5 ist definiert als ein Abstand in der Fahrzeugkörperrahmen-Vorder-Rück-Richtung (fb) von einem vorderen Ende (SFF) einer einzigen Sitzfläche (24a), die es dem Fahrer (500) ermöglicht, auf dem Nur-Fahrer-Einzelsitz (24) zu sitzen, bis zu einem Hüftpunkt (HP) des auf dem Nur-Fahrer-Einzelsitz (24) sitzenden Fahrers (500).

2. Das Neigefahrzeug gemäß Anspruch 1, wobei der Fahrzeugkörperrahmen (21) einen Lenkerträgerabschnitt (211) aufweist und der Lenkermechanismus (5) beinhaltet: ein oberes Querelement (51), das in der Fahrzeugkörperrahmen-Aufwärtsrichtung (u) weiter oben angeordnet ist als das linke Vorderrad (31) und das rechte Vorderrad (32), das obere Querelement (51) ist in einem Zwischenabschnitt davon durch einen oberen Abschnitt des Lenkerträgerabschnitts (211) drehbar gelagert; ein unteres Querelement (52), das in einer Fahrzeugkörperrahmen-Abwärtsrichtung (d) weiter unten als das obere Querelement (51) und in der Fahrzeugkörperrahmen-Aufwärtsrichtung (u) weiter oben als das linke Vorderrad (31) und das rechte Vorderrad (32) angeordnet ist, das untere Querelement (52) ist in einem Zwischenabschnitt davon durch einen unteren Abschnitt des Lenkerträgerabschnitts (211) drehbar gelagert; ein linkes Seitenelement (53), das in einem oberen Abschnitt desselben durch einen linken Abschnitt des oberen Querelements (51) drehbar gelagert ist, das linke Seitenelement (53) ist in einem unteren Abschnitt desselben durch einen linken Abschnitt des unteren Querelements (52) drehbar gelagert; und ein rechtes Seitenelement (54), das in einem oberen Abschnitt desselben durch einen rechten Abschnitt des oberen Querelements (51) drehbar gelagert ist, das rechte Seitenelement (54) in einem unteren Abschnitt desselben durch einen rechten Abschnitt des unteren Querelements (52) drehbar gelagert,

das linke Vorderrad (31) wird von dem linken Seitenelement (53) getragen, und das rechte Vorderrad (32) wird von dem rechten Seitenelement (54) getragen.

3. Das Neigefahrzeug gemäß Anspruch 1 oder 2, wobei eine Länge (L11) des Nur-Fahrer-Einzelsitzes (24) in der Fahrzeugkörperrahmen-Vorder-Rückwärts-Richtung (fb) kürzer ist als eine Länge (L12) von der Radstandsmittelpunkt (WBC) zur Hinterradachse (414) in der Fahrzeugkörperrahmen-Vorder-Rückwärts-Richtung (fb).

4. Das Neigefahrzeug gemäß irgendeinem der Ansprüche 1 bis 3, ferner mit einem Motor zum Erzeugen einer Antriebskraft, um das Hinterrad (4) zu drehen, der Motor hat eine Kurbelwelle, wobei, wenn der Motor von der Fahrzeugkörperrahmen-Links-Rechts-Richtung (l, r) gesehen wird, der Nur-Fahrer-Einzelsitz (24) über einer zentralen Drehachse (Ax) der Kurbelwelle in Fahrzeugkörperrahmen-Aufwärtsrichtung (u) nach oben angeordnet ist.

## Revendications

1. Véhicule inclinable comprenant :

un châssis de corps de véhicule (21) qui s'incline dans une direction d'inclinaison du véhicule vers la gauche (L) en tournant à gauche et dans une direction d'inclinaison du véhicule vers la droite (R) en tournant à droite ;

une roue avant gauche (31) disposée plus vers la gauche en direction vers la gauche du châssis de corps de véhicule (l) que le centre (C0) du châssis de corps de véhicule dans une direction gauche-droite du châssis de corps de véhicule (lr), la roue avant gauche (31) étant rotative autour de l'essieu de la roue avant gauche (314) ;

une roue avant droite (32) disposée plus vers la droite en direction vers la droite du châssis de corps de véhicule (r) que le centre (C0) du châssis de corps de véhicule (21) en direction gauche-droite du châssis de corps de véhicule (lr), la roue avant droite (32) étant rotative autour de l'essieu de la roue avant droite (324) ;

un mécanisme de liaison (5) qui supporte la roue avant gauche (31) et la roue avant droite (32), le mécanisme de liaison (5) permettant à l'essieu de la roue avant gauche (314) d'être situé plus haut en direction vers le haut du châssis de corps de véhicule (u) que l'essieu de la roue avant droite (324) pour incliner le châssis de corps de véhicule (21) en direction d'inclinaison du véhicule vers la gauche (L) en tournant à gauche, le mécanisme de liaison (5) permettant à l'essieu de la roue avant droite (324) d'être situé plus haut en direction vers le haut du châssis de corps de véhicule (u) que l'essieu de la roue avant gauche (314) pour incliner le châssis de corps de véhicule (21) en direction d'inclinaison du véhicule vers la droite (R) en tournant à droite ;

une roue arrière (4) disposée plus vers l'arrière en direction vers l'arrière du châssis de corps de véhicule (b) que la roue avant gauche (31) et la roue avant droite (32) et rotative autour d'un essieu de roue arrière (414), la roue arrière (4) étant inclinée conjointement au châssis de corps de véhicule (21) en direction d'inclinaison du véhicule vers la gauche (L) en tournant à gauche et inclinée conjointement au châssis de corps de véhicule (21) en direction d'inclinaison du véhicule vers la droite (R) en tournant à droite ;

un mécanisme de direction (7) pour diriger la roue avant gauche (31) et la roue avant droite (32) ;

un siège conducteur monoplace (24) supporté par le châssis de corps de véhicule (21), le siège conducteur monoplace (24) étant destiné uniquement au conducteur (500) qui commande le mécanisme de direction (7) ;

une section de transport (85) disposée plus en arrière en direction vers l'arrière du châssis de corps de véhicule (b) que le siège conducteur monoplace (24), la section de transport (85) étant chargée avec une charge qui y est montée à l'arrière (90), et

un espace de stockage (110) pourvu sous le siège conducteur monoplace (24) en direction vers le bas du châssis de corps de véhicule (d), et le siège conducteur monoplace (24) est capable d'adopter un état fermé dans lequel l'espace de stockage (110) n'est pas exposé à l'extérieur du véhicule inclinable et un état ouvert dans lequel l'espace de stockage (110) est exposé à l'extérieur du véhicule inclinable,

dans lequel, dans un état où le mécanisme de liaison (5) met l'essieu de la roue avant gauche (314) et l'essieu de la roue avant droite (324) au même niveau en direction haut-bas du châssis de corps de véhicule (ud) et où la roue avant gauche (31), la roue avant droite (32) et la roue arrière (4) sont en contact avec le sol, les formules (a), (b) et (c) s'appliquent :

$$L1 < L2 \dots (a)$$

$$L3 < L2 \dots (b)$$

$$L4 < L5 \dots (c)$$

où L1 est défini comme la distance en direction avant-arrière du châssis de corps de véhicule (fb) depuis une extrémité arrière (SB) du siège conducteur monoplace (24) jusqu'à l'essieu de la roue arrière (414),

L2 est défini comme la distance en direction avant-arrière du châssis de corps de véhicule (fb) depuis l'extrémité arrière (SB) du siège conducteur monoplace (24) jusqu'au centre de l'empattement (WBC) situé à un centre entre l'essieu de la roue avant gauche (314) ou l'essieu de la roue avant droite (324) et l'essieu de la roue arrière (414) en direction avant-arrière du châssis de corps de véhicule (fb),

L3 est défini comme la distance en direction avant-arrière du châssis de corps de véhicule (fb) depuis l'extrémité arrière (SB) du siège conducteur monoplace (24) jusqu'au centre de la section de transport (85) en direction avant-arrière du châssis de corps de véhicule (fb),

L4 est défini comme la distance en direction avant-arrière du châssis de corps de véhicule (fb) depuis l'extrémité arrière (SB) du siège conducteur monoplace (24) jusqu'à l'extrémité avant de la section de transport (85), et

L5 est défini comme la distance en direction avant-arrière du châssis de corps de véhicule (fb) depuis l'extrémité avant (SFF) d'une surface d'assise monoplace (24a) qui permet au conducteur (500) de s'asseoir dans le siège conducteur monoplace (24) jusqu'à un point de hanche (HP) du conducteur (500) assis sur le siège conducteur monoplace (24).

2. Véhicule inclinable selon la revendication 1, dans lequel

le châssis de corps de véhicule (21) comprend une portion de support de liaison (211), et le mécanisme de liaison (5) comprend :

un élément d'entretoise supérieur (51) disposé plus haut en direction vers le haut du châssis de corps de véhicule (u) que la roue avant gauche (31) et la roue avant droite (32), l'élément d'entretoise supérieur (51) étant supporté de manière rotative dans une portion intermédiaire de celui-ci par une portion supérieure de la portion de support de liaison (211) ;

un élément d'entretoise inférieur (52) disposé plus bas en direction vers le bas du châssis de corps de véhicule (d) que l'élément d'entretoise supérieur (51) et plus haut en direction vers le haut du châssis de corps de véhicule (u) que la roue avant gauche (31) et la roue avant droite (32), l'élément d'entretoise inférieur (52) étant supporté de manière rotative dans une portion intermédiaire de celui-ci par une portion inférieure de la portion de support de liaison (211) ;

un élément côté gauche (53) supporté de manière rotative dans une portion supérieure de celui-ci par une portion gauche de l'élément d'entretoise supérieur (51), l'élément côté gauche (53) étant supporté de manière rotative dans une portion inférieure de celui-ci par une portion gauche de l'élément d'entretoise inférieur (52) ; et

un élément côté droit (54) supporté de manière rotative dans une portion supérieure de celui-ci par une portion droite de l'élément d'entretoise supérieur (51), l'élément côté droit (54) étant supporté de manière rotative dans une portion inférieure de celui-ci par une portion droite de l'élément d'entretoise inférieur (52),

la roue avant gauche (31) est supportée par l'élément côté gauche (53), et la roue avant droite (32) est supportée par l'élément côté droit (54).

3. Véhicule inclinable selon la revendication 1 ou 2, dans lequel la longueur (L11) du siège conducteur monoplace (24) en direction avant-arrière du châssis de corps de véhicule (fb) est inférieure à la longueur (L12) du centre de l'empattement (WBC) jusqu'à l'essieu de la roue arrière (414) en direction avant-arrière du châssis de corps de véhicule (fb).

4. Véhicule inclinable selon l'une quelconque des revendications 1 à 3, comprenant en outre un moteur pour générer une force d'entraînement afin de faire tourner la roue arrière (4), le moteur ayant un vilebrequin, dans lequel, quand le moteur est vu en direction vers la gauche ou vers la droite du châssis de corps de véhicule (l, r), le siège conducteur monoplace (24) est disposé au-dessus de l'axe central (Ax) de rotation du vilebrequin en direction vers le haut du châssis de corps de véhicule (u).

Fig.1

EP 3 689 727 B1

Fig.2

Fig.3

Fig.4

EP 3 689 727 B1

Fig.5

Fig.6

EP 3 689 727 B1

Fig.7

EP 3 689 727 B1

Fig.8

EP 3 689 727 B1

Fig.9

Fig.10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011042225 A
- JP 2005247303 A

- US 8814186 B